(19) Europäisches Patentamt
European Patent Office
Office européen des brevets

(11) **EP 1 731 922 B1**

(12) **EUROPÄISCHE PATENTSCHRIFT**

(45) Veröffentlichungstag und Bekanntmachung des Hinweises auf die Patenterteilung:
**17.07.2013 Patentblatt 2013/29**

(51) Int Cl.:
*G01S 15/93* *(2006.01)*  *G01S 13/93* *(2006.01)*

(21) Anmeldenummer: **06090089.1**

(22) Anmeldetag: **18.05.2006**

(54) **Verfahren und Vorrichtung zum Bestimmen von Freiflächen in der Umgebung eines Kraftfahrzeuges**

Method and device for determining free areas in the vicinity of a motor vehicle

Procédé et dispositif destinés à la détermination de surfaces libres dans l'environnement d'un poids lourd

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **02.06.2005 DE 102005026386**

(43) Veröffentlichungstag der Anmeldung:
**13.12.2006 Patentblatt 2006/50**

(73) Patentinhaber: **Volkswagen Aktiengesellschaft 38440 Wolfsburg (DE)**

(72) Erfinder:
• **Plagge, Michael**
  **10119 Berlin (DE)**
• **Paul, Klaus, Dr.**
  **12435 Berlin (DE)**
• **Ortmann, Frank**
  **38518 Gifhorn (DE)**

(74) Vertreter: **Patentanwälte Bressel und Partner Park Kolonnaden Potsdamer Platz 10 10785 Berlin (DE)**

(56) Entgegenhaltungen:
EP-A- 1 672 390    DE-A1- 4 333 112
DE-A1- 10 124 909    DE-A1- 10 310 214
DE-A1- 19 842 250

• GRAVES K ET AL: "Continuous localization in changing environments" COMPUTATIONAL INTELLIGENCE IN ROBOTICS AND AUTOMATION, 1997. CIRA'97., PROCEEDINGS., 1997 IEEE INTERNATIONAL SYMPOSIUM ON MONTEREY, CA, USA 10-11 JULY 1997, LOS ALAMITOS, CA, USA,IEEE COMPUT. SOC, US, 10. Juli 1997 (1997-07-10), Seiten 28-33, XP010239675 ISBN: 0-8186-8138-1
• FONG E H L ET AL: "Representing a 3-D environment with a 21/2-D map structure" PROCEEDINGS OF THE 2003 IEEE/RSJ INTERNATIONAL CONFERENCE ON INTELLIGENT ROBOTS AND SYSTEMS. (IROS 2003). LAS VEGAS, NV, OCT. 27 - 31, 2003, IEEE/RSJ INTERNATIONAL CONFERENCE ON INTELLIGENT ROBOTS AND SYSTEMS, NEW YORK, NY : IEEE, US, Bd. VOL. 4 OF 4, 27. Oktober 2003 (2003-10-27), Seiten 2986-2991, XP010675511 ISBN: 0-7803-7860-1
• ELFES A: "USING OCCUPANCY GRIDS FOR MOBILE ROBOT PERCEPTION AND NAVIGATION" COMPUTER, IEEE SERVICE CENTER, LOS ALAMITOS, CA, US, Bd. 22, Nr. 6, 1. Juni 1989 (1989-06-01), Seiten 46-57, XP000035969 ISSN: 0018-9162
• SUGIMOTO S ET AL: "Obstacle detection using millimeter-wave radar and its visualization on image sequence" PATTERN RECOGNITION, 2004. ICPR 2004. PROCEEDINGS OF THE 17TH INTERNATIONAL CONFERENCE ON CAMBRIDGE, UK AUG. 23-26, 2004, PISCATAWAY, NJ, USA,IEEE, Bd. 3, 23. August 2004 (2004-08-23), Seiten 342-345, XP010724669 ISBN: 0-7695-2128-2

- ZOU YI ET AL: "Multi-ultrasonic sensor fusion for autonomous mobile robots" PROCEEDINGS OF THE SPIE - THE INTERNATIONAL SOCIETY FOR OPTICAL ENGINEERING SPIE-INT. SOC. OPT. ENG USA, Bd. 4051, 2000, Seiten 314-321, XP002397150 ISSN: 0277-786X
- PAGAC D ET AL: "An evidential approach to probabilistic map-building" ROBOTICS AND AUTOMATION, 1996. PROCEEDINGS., 1996 IEEE INTERNATIONAL CONFERENCE ON MINNEAPOLIS, MN, USA 22-28 APRIL 1996, NEW YORK, NY, USA,IEEE, US, Bd. 1, 22. April 1996 (1996-04-22), Seiten 745-750, XP010162837 ISBN: 0-7803-2988-0
- VACHERAND F: "Fast local path planner in certainty grid" ROBOTICS AND AUTOMATION, 1994. PROCEEDINGS., 1994 IEEE INTERNATIONAL CONFERENCE ON SAN DIEGO, CA, USA 8-13 MAY 1994, LOS ALAMITOS, CA, USA,IEEE COMPUT. SOC, 8. Mai 1994 (1994-05-08), Seiten 2132-2137, XP010097385 ISBN: 0-8186-5330-2
- PATENT ABSTRACTS OF JAPAN Bd. 2003, Nr. 06, 3. Juni 2003 (2003-06-03) & JP 2003 054341 A (NISSAN MOTOR CO LTD), 26. Februar 2003 (2003-02-26)

**Beschreibung**

Die Erfindung betrifft ein Verfahren und eine Vorrichtung zum Bestimmen von Freiflächen in der Umgebung eines Kraftfahrzeugs.

Die Kenntnis von Freiflächen in der Umgebung eines Kraftfahrzeugs ist beispielsweise beim Einparken eines Kraftfahrzeugs in eine Parklücke von besonderer Bedeutung. Oft ist es ist für einen Fahrer schwierig abzuschätzen, ob eine Parklücke am Straßenrand ausreichend groß ist, um das eigene Kraftfahrzeug einparken zu können. Während eines Einparkvorgangs in eine enge Parklücke ist es weiter vorteilhaft, wenn dem Fahrer zusätzlich Hilfen bereitgestellt werden, die ihm mitteilen, wie weit er vom Rand der Freifläche entfernt ist, d. h., wie groß sein Abstand zu einem Hindernis ist.

Aus dem Stand der Technik sind verschiedene Einparkhilfen bekannt, die in der Regel Signallaufzeitmessungen zum Bestimmen eines Abstands von einem Hindernis verwenden.

Aus DE 101 51 965 A1 ist ein Verfahren bekannt, bei dem mittels Sensoren die Höhen von Hindernissen in der Umgebung des Kraftfahrzeugs vermessen werden. Hierzu werde Messungen an zwei unterschiedlichen Orten ausgeführt. Unter Berücksichtigung der zwischen diesen beiden Orten zurückgelegten Strecke ist es möglich, die Höhe von Hindernissen zu ermitteln.

Aus DE 198 42 250 A1 ist ein Verfahren bekannt, bei dem ein senkrechter Abstand von einem nächstliegenden Objekt in der Umgebung eines Kraftfahrzeugs anhand von Laufzeitmessungen ermittelt wird. Hierzu werden Laufzeitmessungen mit mindestens zwei Messköpfen ausgeführt. Anschließend werden direkte Messergebnisse, das heißt solche Messdaten, die aus dem Empfang von reflektierten Signalen herrühren, die aus demselben Messkopf ausgesandt wurden, und indirekte Messergebnisse ausgewertet, das heißt solche Messdaten, die aus dem Empfang von reflektierten Signalen herrühren, die von einem anderen Messkopf ausgesandt wurden. Die einzelnen Messergebnisse werden paarweise ausgewertet, um mittels eines Triangulationsverfahrens mögliche Objektorte zu ermitteln. Hierbei wird für jeden möglichen Objektort die Häufigkeit seines Auftretens bei der Auswertung registriert. Für die möglichen Objektorte die eine festgelegte Häufigkeitsschwelle übertrafen wird der senkrechte Abstand zur Kraftfahrzeugaußenkontur bestimmt. Ein hierbei festgestellter minimaler Abstand wird über eine Anzeigeeinrichtung, die als Lautsprecher ausgestaltet ist, ausgegeben.

DE 102 21 339 A1 beschreibt eine Einparkhilfe eines Kraftfahrzeugs, bei dem ein Objektabstand und eine Position mittels Triangulation anhand von Messergebnissen zweier Laufzeitmesssensoren bestimmt werden. Bei einem Unterschreiten eines Mindestabstands des Kraftfahrzeugs von dem Objekt kann das Objekt zumindest von einem der Sensoren nicht mehr erfasst werden, so dass eine Triangulation und folglich auch eine Abstandsbestimmung nicht mehr möglich sind. Um den Abstand in dieser Situation zu bestimmen, wird der Abstand anhand des zurückgelegten Wegs und des Lenkwinkels ermittelt.

Die bekannten Systeme weisen den Nachteil auf, dass Objekte in der Umgebung nur detektiert werden können, wenn sie in zwei zeitgleich oder nahezu zeitgleich durchgeführten Laufzeitmessungen erfasst werden.

Die DE 103 10 214 A1 beschreibt ein Verfahren zum Erfassen von Umgebungsinformationen und ein Verfahren zum Bestimmen der Lage einer Parklücke. Zum Erfassen von Umgebungsinformationen wird eine Quelle benutzt, die pulsierende Signale bestimmter Frequenzen aussendet. Die von einem Gegenstand reflektierten Signale werden in einem Empfänger empfangen. In einer Steuereinheit wird aufgrund der Laufzeit der reflektierten Strahlen der Abstand des Gegenstands zum Sensor ermittelt. Aufgrund der Überlagerung einer Vielzahl von Messungen wird ein Diagramm erstellt, das eine Überlagerung der Vielzahl von Messungen entspricht und aufgrund dessen auf die Position der die Strahlen reflektierenden Gegenstände bezüglich der Position des Sensors geschlossen wird.

Aus der Veröffentlichung von Kevin Graves et al.: "Continuous localization in changing environments" Computational intelligence in robotics and automation, 1997, Cira'97, Proceedings., 1997 IEEE International Symposium on Monterey, CA, USA 10-11 Juli 1997, Los Alamitos, CA, USA, IEEE Comput. Soc, US 10. Juli 1997 (1997-07-10), Seiten 28-33, ist ein Verfahren zur Ortsbestimmung eines Roboters in einer sich verändernden Umgebung beschrieben. Eine kontinuierliche Ortsbestimmung ist eine Technik, die es einem Roboter gestattet, eine genaue Schätzung seines Ortes auszuführen, indem er regelmäßige und kleine Korrekturen seiner Odometrie vornimmt. Die kontinuierliche Ortsbestimmung verwendet eine Hinweisrasterdarstellung, welche als "evidence grid" bezeichnet wird, als Karte. Der Technik zum Erstellen eines Hinweisrasters wird eine lernende Komponente zugefügt. Dieses gestattet der kontinuierlichen Ortsbestimmung, die Langzeitkarte (das Hinweisraster) mit aktuellen Sensormessungen zu aktualisieren.

Die Veröffentlichung von Edward H. L. Fong et al.: Representing a 3-D environment with a 2 1/2-D map structure" Proceedings of the 2003 IEEE/RSJ International conference on intelligent robots and systems (IROS 2003), Las Vegas, NV, 27-31. Oktober 2003, IEEE/RSJ International conference on intelligent robots and systems, New York, NY: IEEE, US, Bd. Vol. 4 of 4, 27. Oktober 2003 (2003-10-27), Seiten 2986-2991 untersucht die Entwicklung einer zweieinhalbdimensionalen Kartenstruktur, die einem autonomen mobilen Roboter ein dreidimensionales Modell seiner Umgebung liefert. Die zweieinhalbdimensionale Struktur wird hergestellt, indem ein bekanntes Hinweisraster (evidence grid) modifiziert wird, um eine Höhe gemeinsam mit einem Wahrscheinlichkeitswert für jede Zellenposition zu speichern, um variierende Höhen einer 3D-Umgebung aufzuzeichnen. Es ergibt sich eine Kartenstruktur, die in der Lage ist, einem autonomen mobilen Roboter eine begrenzte Darstellung einer 3D-Umgebung zu liefern, die es ihm gestattet, eine Hinderniserkennung, eine Wegplanung und zu einem gewissen Ausmaß eine Ortsbestimmung auszuführen.

Aus der DE 101 24 909 A1 sind ein Verfahren und eine Vorrichtung zum Betrieb einer Radarsensoranordnung mit einer Anzahl von benachbarten, weitgehend untereinander synchronisierten Einzelsensoren zur Bestimmung der Position eines Zielobjekts bekannt. In einem Messzyklus wird die Laufzeit des von einem Einzelsensor ausgesendeten und vom Zielobjekt zu diesem Einzelsensor (Direktecho) und zu einem jeweils anderen Einzelsensor reflektierten Radarsignals (Kreuzecho) reflektierten Radarsignals ausgewertet. Aus der Auswertung der Direkt- und der Kreuzechos wird zumindest die Lage des Zielobjekts bestimmt und ein Detektionsgütesignal ermittelt und nach Erreichen eines vorgegebenen Betrags des Detektionsgütesignals bei einem Zielobjekt wird eine Kalibrierung durchgeführt.

Der Erfindung liegt das technische Problem zugrunde, ein verbessertes Verfahren und eine verbesserte Vorrichtung zum Bestimmen von Freiflächen in einer Umgebung eines Kraftfahrzeugs zu schaffen, wobei eine Kontur der Freifläche mit einer Auflösung bestimmbar ist, die größer als die Auflösung einer einzelnen Signallaufzeitmessung ist.

Das technische Problem wird durch ein Verfahren mit den Merkmalen gemäß dem Patentanspruch 1 und durch eine Vorrichtung mit den Merkmalen gemäß dem Patentanspruch für 21 gelöst. Weitere vorteilhafte Ausgestaltungen der Erfindung ergeben sich aus den Unteransprüchen.

Der Erfindung liegt der Gedanke zugrunde, dass eine Signallaufzeitmessung über einen Messbereich Informationen liefert. Aus dem Messergebnis einer Signallaufzeitmessung kann so eine Objektwahrscheinlichkeitsverteilung bestimmt werden, die auch als Sensor- oder Messmodell bezeichnet wird. Die Objektwahrscheinlichkeit ist von dem Messergebnis abhängig. Möglichst alle Informationen, die diese Objektwahrscheinlichkeitsverteilung enthält, sollen für die Ermittlung von Freiflächen in der Umgebung des Kraftfahrzeugs verwendet werden. Daher werden die einzelnen Objektwahrscheinlichkeitsverteilungen iterativ zu einer Hinderniswahrscheinlichkeitsverteilung fusioniert. Vorteil einer solchen Fusionierung ist, dass Signallaufzeitmessungen miteinander auswertbar sind, die nicht zeitgleich oder in einem zeitlich sehr kurzen Zeitabstand gemessen worden sind, wie dieses bei den Verfahren nach dem Stand der Technik erforderlich ist. Ferner wird auch die Information verwertet, die aus einer einzelnen Messung stammt. Dies bedeutet, dass ein Hindernis/Objekt in der Umgebung des Kraftfahrzeugs, das nur in einer Signallaufzeitmessung ein ausgesandtes Aktorsignal reflektiert, einen Einfluss auf die Hinderniswahrscheinlichkeit hat. Ferner wird die Hinderniswahrscheinlichkeit in Form einer Umgebungskarte des Kraftfahrzeugs angefertigt. Somit können beispielsweise beim Einparken auch Hindernisse, an denen das Kraftfahrzeug bereits vorbeigefahren ist und/oder die nicht mehr im Erfassungsbereich liegen, die jedoch noch in einem Schwenkbereich des Kraftfahrzeugs liegen, berücksichtigt werden.

Die Objektwahrscheinlichkeitsverteilungen weisen in einem zweidimensionalen Raum in der Regel die Form eines Sektors oder eines Abschnitts einer unscharfen Ellipse auf, in deren einen Fokus sich der Aktor und in deren anderen Fokus sich der Sensor befindet. Hierbei wird von einem punktförmigen Aktor und einem punktförmigen Sensor ausgegangen. Die Unschärfe um den Ellipsenabschnitt ist in der Regel gaussförmig. Die Unschärfe ist unter anderem von einer Entfernung des Aktors/Sensors gegenüber den vermessenen Objekten, d. h. der gemessenen Laufzeit, abhängig. In dem Sonderfall, dass sich der Aktor und der Sensor am selben Ort befinden, geht die Ellipse bzw. deren Abschnitt in einen Sektor eines Kreises über. Im dreidimensionalen Fall besitzt die Objektwahrscheinlichkeitsverteilung in der Regel die Form eines Abschnitts eines unscharfen Rotationsellipsoids. In Abhängigkeit von den verwendeten Aktoren und Sensoren kann die Objektwahrscheinlichkeitsverteilung auch jede beliebige andere Form aufweisen, solange sie ein Maß für die Wahrscheinlichkeit angibt, in einem bestimmten Bereich der Umgebung des Kraftfahrzeugs ein Objekt/Hindernis vorzufinden.

Insbesondere wird ein Verfahren zum Bestimmen von Freiflächen in einer Umgebung eines Kraftfahrzeugs vorgeschlagen, bei dem folgende Schritte iteriert werden:

a. Durchführen einer Signallaufzeitmessung zum Vermessen von Objekten in der Umgebung des Kraftfahrzeugs;

b. Bestimmen einer Objektwahrscheinlichkeitsverteilung anhand des Ergebnisses der Signallaufzeitmessung in Form eines Kreissektors, wobei sich ein Aktor als ein Sender und ein Sensor als ein Empfänger am selben Ort befinden, oder eines Sektors oder eines Abschnitts einer unscharfen Ellipse bestimmt wird, in deren einen Fokus sich der Aktor als der Sender und in deren anderen Fokus sich der Sensor als der Empfänger befindet, wobei die Objektwachrscheinlichkeit so bestimmt wird, dass die Objektwahrscheinlichkeitsverteilung eine gaussförmige Unschärfe um den Ellipsenabschnitt bzw. -sektor oder Kreissektor aufweist; und

c. Fusionieren der Objektwahrscheinlichkeitsverteilung mit einer Hinderniswahrscheinlichkeitsverteilung, wobei die Hinderniswahrscheinlichkeitsverteilung mittels einer zellulären Umgebungskarte des Kraftfahrzeugs repräsentiert wird und beim Fusionieren Belegungswerte der Zellen verringert und/oder erhöht werden Kraftfahrzeug und wobei die Zellen ursprünglich einen vorgegebenen Belegungswert aufweisen.

Ferner wird eine Vorrichtung zum Bestimmen von Freiflächen in einer Umgebung eines Kraftfahrzeugs vorgeschlagen, die umfasst:

d. Laufzeitmessmittel zum Durchführen einer Signallaufzeitmessung zum Vermessen von Objekten in der Umgebung des Kraftfahrzeugs;

e. Verteilungsbestimmungsmittel zum Bestimmen einer Objektwahrscheinlichkeitsverteilung anhand des Ergebnisses der Signallaufzeitmessung in Form eines Kreissektors, wobei sich ein Aktor als ein Sender und ein Sensor als ein Empfänger am selben Ort befinden, oder eines Sektors oder eines Abschnitts einer unscharfen Ellipse bestimmt wird, in deren einen Fokus sich der Aktor Aktor als der Sender und in deren anderen Fokus sich der Sensor als der Empfänger befindet, wobei die Objektwachrscheinlichkeit so bestimmt wird, dass die Objektwahrscheinlichkeitsverteilung eine gaussförmige Unschärfe um den Ellipsenabschnitt bzw. -Sektor oder Kreissektor aufweist;

f. Kartenmittel zum Fusionieren der Objektwahrscheinlichkeitsverteilung mit einer Hinderniswahrscheinlichkeitsverteilung, wobei die Hinderniswahrscheinlichkeitsverteilung mittels einer zellulären Umgebungskarte des Kraftfahrzeugs repräsentiert ist und beim Fusionieren Belegungswerte der Zellen verringerbar und/oder erhöhbar sind und wobei die Zellen ursprünglich einen vorgegebenen Belegungswert aufweisen; und

g. Iterationsmittel, die so ausgestaltet sind, dass iterativ Signallaufzeitmessungen, die Bestimmung der entsprechenden Objektwahrscheinlichkeitsverteilungen und das Fusionieren mit der Hinderniswahrscheinlichkeitsverteilung ausführbar sind.

Vorteil sowohl der Vorrichtung als auch des Verfahrens ist es, dass die Konturen der Freifläche mit einer Auflösung bestimmt werden können, die größer als die Auflösung einer einzelnen Signallaufzeitmessung ist, welche im Wesentlichen durch die Apertur der Laufzeitmessmittel bestimmt ist. Eine iterative Fusionierung der Objektwahrscheinlichkeitsverteilung mit der Hinderniswahrscheinlichkeitsverteilung bietet die Möglichkeit, die Belegungswerte der Zellen der Umgebungskarte sehr gezielt zu verändern. Es kann eine genaue Wahrscheinlichkeitsangabe für das Vorhandensein von Hindernissen in den jeweiligen Zellen gemacht werden, obwohl die einzelnen Signallaufzeitmessungen große Messbereiche abdecken. Es können bei der Auswertung Messergebnisse und daraus bestimmte Objektwahrscheinlichkeitsverteilungen gemeinsam ausgewertet werden, die nur einen kleinen gemeinsamen Umgebungsbereich des Kraftfahrzeugs oder keinen gemeinsamen Umgebungsbereich abdecken. Eine höhere Aussagekraft wird erreicht, wenn sich die Messbereiche aufeinander folgender Signallaufzeitmessungen überlappen.

Daher sieht eine vorteilhafte Weiterbildung der Erfindung vor, dass die Verteilungsbestimmungsmittel so ausgestaltet sind, dass bei der Bestimmung der Hinderniswahrscheinlichkeitsverteilung die Detektionsgeometrien berücksichtigbar sind.

Unter einer Detektionsgeometrie wird im Rahmen dieser Beschreibung eine Geometrie verstanden, die durch einen Sendebereich eines Aktors (Senders), einen Empfangsbereich eines Sensors (Empfängers) und die relativen Stellungen des Aktors, des Sensors und von Objekten in der Umgebung des Kraftfahrzeugs relativ zueinander charakterisiert ist.

Um Fehler zu minimieren, die dadurch entstehen, dass einige Objekte/Hindernisse, wenn sie von einem Signal aus einer bestimmten Richtung getroffen werden, dieses Signal nur gerichtet so reflektieren, dass kein Signal an dem Empfänger erfasst wird, sieht eine Weiterbildung der Erfindung vor, dass die Detektionsgeometrie einer nachfolgenden Signallaufzeitmessung verändert wird. Die Wahrscheinlichkeit, dass ein Objekt/Hindernis in Signallaufzeitmessungen mit unterschiedlichen Detektionsgeometrien "unentdeckt" bleibt, ist sehr gering.

Ferner ist bei einer Weiterbildung des erfindungsgemäßen Verfahrens vorgesehen, dass bei der Fusionierung der Objektwahrscheinlichkeitsverteilung mit der Hinderniswahrscheinlichkeitsverteilung eine Konsistenzüberprüfung der Objektwahrscheinlichkeitsverteilung und einer vorangehenden Objektwahrscheinlichkeitsverteilung vorgenommen wird. Eine vorteilhafte Ausführungsform der Vorrichtung umfasst folglich Konsistenzprüfungsmittel, mittels derer bei der Fusionierung der Objektwahrscheinlichkeitsverteilung mit der Hinderniswahrscheinlichkeitsverteilung eine Konsistenzüberprüfung der Objektwahrscheinlichkeitsverteilung und einer vorangehenden Objektwahrscheinlichkeitsverteilung vornehmbar ist. Hierdurch ist es möglich, Detektionsfehler leichter aufzuspüren. Zeigt beispielsweise die vorangehende Objektwahrscheinlichkeitsverteilung an, dass mit einer hohen Wahrscheinlichkeit ein Objekt in einem Umgebungsbereich des Kraftfahrzeugs vorhanden ist, für den die Objektwahrscheinlichkeitsverteilung angibt, dass in diesem Umgebungsbereich kein Objekt vorhanden ist, so kann hier ein möglicher Messfehler entdeckt werden. Solche Messfehler treten beispielsweise auf, wenn ein von einem Aktor ausgesandtes Aktorsignal schräg auf eine glatte Oberfläche fällt. In einem solchen Fall ist es möglich das kein Anteil des Aktorsignals zu dem Sensor zurückreflektiert wird. Werden die zwei Signallaufzeitmessungen mit unterschiedlichen Detektionsgeometrien durchgeführt, wird die Wahrscheinlichkeit dafür, dass bei beiden Messungen kein Aktorsignal zu einem Empfänger reflektiert wird, deutlich verringert. Die Konsistenzprüfung kann ferner genutzt werden, um einen Ausfall einzelner Komponenten der Signallaufzeitmessmittel festzustellen.

Um die Signallaufzeitmessungen ausführen zu können, umfassen bei einer Ausführungsform der Erfindung die Laufzeitmessmittel einen Aktor und einen Sensor.

Eine besonders vorteilhafte Ausführungsform der Erfindung sieht vor, dass die Signallaufzeitmessung und die nachfolgende Signallaufzeitmessung mit demselben Sensor durchgeführt werden. Hierdurch wird eine preiswerte Umsetzung der Erfindung möglich, da nur ein Sensor und eine Auswerteelektronik benötigt werden.

Ein solches Verfahren kann vorteilhaft mit einer Ausführungsform der Vorrichtung ausgeführt werden, bei dem eine relative Stellung zwischen dem Aktor und/oder dem Sensor und/oder der Umgebung des Kraftfahrzeugs zwischen der Signallaufzeitmessung und der nachfolgenden Signallaufzeitmessung veränderbar ist. Eine relative Stellungsänderung führt dazu, dass Messungen, die zu unterschiedlichen Zeitpunkten ausgeführt werden, mit unterschiedlichen Detektionsgeometrien ausgeführt werden.

Eine andere Ausführungsform der Erfindung sieht vor, dass die Laufzeitmessmittel einen weiteren Aktor umfassen, der von dem Aktor beabstandet angeordnet ist. Bei der Verwendung von zwei oder mehr Aktoren, können ebenfalls verschiedene Detektionsgeometrien mit einem einzelnen Sensor verwirklicht werden. Ferner ist keine Stellungsänderung zwischen den Aktoren und dem Sensor und/oder der Umgebung notwendig. So können Messungen ausgeführt werden, bei denen ein Aktor für die Signallaufzeitmessung und ein weiterer Aktor für die nachfolgende Signallaufzeitmessung verwendet wird, wobei die Aktoren voneinander beabstandet an dem Kraftfahrzeug angeordnet sind.

Eine andere Ausgestaltung des erfindungsgemäßen Verfahrens sieht vor, dass für die Signallaufzeitmessung und für die nachfolgende Signallaufzeitmessung derselbe Aktor verwendet wird. Wird in einem Überlappungsbereich nur bei der Signallaufzeitmessung oder der nachfolgenden Signallaufzeitmessung ein Objekt registriert, so kann auf eine Fehlmessung rückgeschlossen werden. Eine solche Ausführungsform des Verfahrens kann beispielsweise mit einer Weiterbildung der erfindungsgemäßen Vorrichtung verwirklicht werden, bei der die Laufzeitmessmittel einen weiteren Sensor umfassen, der von dem Sensor beabstandet angeordnet ist.

Eine weitere Ausführungsform sieht vor, dass das Kraftfahrzeug mit dem/n daran angeordneten Sensor/en und dem/n Aktor/en seine Position zwischen den Signallaufzeitmessungen verändert.

Um die Veränderung der Position erfassen zu können, sieht eine bevorzugte Ausführungsform der Erfindung vor, dass der Aktor und der Sensor an dem Kraftfahrzeug angeordnet sind und eine Positionsbestimmungsvorrichtung vorgesehen ist, mittels der eine Veränderung der Kraftfahrzeugposition relativ zu der Umgebung ermittelbar ist. Hierdurch kann eine hohe Auflösung mit nur einem oder wenigen Aktor/Sensor-Paaren erreicht werden. Ferner kann eine große Umgebung des Kraftfahrzeugs mit hoher Auflösung vermessen werden.

Bei einer Weiterbildung des Verfahrens werden daher die Signallaufzeitmessung mit dem Aktor und dem Sensor und die nachfolgende Signallaufzeitmessung mit dem weiteren Aktor und dem weiteren Sensor ausgeführt.

Hierbei können die Signallaufzeitmessung und die nachfolgende Signallaufzeitmessung zeitlich versetzt oder zeitgleich ausgeführt werden, wobei bei zeitgleicher Ausführung der Messungen Aktorsignale mit unterschiedlichen Kennungen oder unterschiedlicher Art verwendet werden und wobei die zeitgleich ausgeführten Signallaufzeitmessungen wie einzelne Iterationsschritte behandelt werden. Die unterschiedlichen Arten von Aktorsignalen umfassen unter anderem Ultraschallsignale, Radarsignale, Infrarotsignale usw.

Bei einer besonders vorteilhaften Ausführungsform der Erfindung umfassen die Laufzeitmessmittel Ultraschall-Aktoren und Ultraschall-Sensoren und/oder Aktoren zum Aussenden von elektromagnetischer Strahlung und Sensoren zum Empfangen elektromagnetischer Strahlung. Solche Aktoren und Sensoren werden in Kraftfahrzeugen bereits eingesetzt und sind als robust und zuverlässig bekannt. Insbesondere eine Verwendung unterschiedlicher Arten von Aktor/Sensor-Paaren verringert die Fehlerwahrscheinlichkeit, die dadurch verursacht wird, dass ein vorhandenes Objekt weder bei der Signallaufzeitmessung noch bei der nachfolgenden Signallaufzeitmessung erfasst wird, da unterschiedliche Aktorsignale unterschiedlich gut von Objekten reflektiert werden.

Um Freiflächen in der Umgebung des Kraftfahrzeugs zu ermitteln, umfasst eine Weiterbildung der Erfindung Flächenermittlungsmittel. Mittels der Flächenermittlungsmittel werden in der Umgebungskarte Freiflächen anhand zusammenhängender Zellen mit einem Belegungswert unterhalb eines vorgegebenen Freiwertes ermittelt.

Die ermittelten Freiflächen werden bei einer vorteilhaften Ausgestaltung der Erfindung als Grundlage zum Steuern eines Einparkmanöver, eines Ausparkmanövers, eines Spurwechsel- oder eines anderen Fahrmanövers des Kraftfahrzeugs oder eines Kraftfahrzeugzustands verwendet. Eine Weiterbildung der erfindungsgemäßen Vorrichtung sieht hierfür eine entsprechend ausgestaltete Steuereinheit vor.

Eine weitere Ausführungsform der Erfindung umfasst Aktionsmittel. Die Aktionsmittel sind so ausgestaltet, dass bei einer Annäherung und/oder einer möglichen Annäherung des Kraftfahrzeugs oder eines Kraftfahrzeugteils an eine Position, deren entsprechende Zelle in der Umgebungskarte einen Belegungswert oberhalb eines Auslöseschwellenwertes aufweist, eine Aktion ausgelöst wird. So kann bei einem eingeparkten Kraftfahrzeug eine Tür verriegelt werden, wenn ein Öffnen nicht möglich ist, ohne mit einem Hindernis zu kollidieren, das in der Umgebungskarte erfasst ist.

Eine besonders vorteilhafte Weiterbildung sieht daher vor, dass die Aktion ein Ausgeben einer Warnung und/oder eines verarbeitbaren Signals umfasst. Unter einem verarbeitbaren Signal wird ein elektronisches, optisches oder ähnliches Signal verstanden, welches mit technischen Mitteln verarbeitet werden kann.

Bei einer bevorzugten Ausführungsform der Erfindung sind die Verteilungsbestimmungsmittel und/oder die Konsistenzprüfungsmittel und/oder die Kartenmittel und/oder die Flächenermittlungsmittel und/oder die Steuereinheit und/oder die Aktionsmittel in Software und/oder Hardware ausgestaltet.

Eine besonders effektive Fusionierung der Objektwahrscheinlichkeitsverteilungen mit der Hinderniswahrscheinlichkeitsverteilung erhält man bei einer Ausführungsform, bei der die Kartenmittel so ausgestaltet sind, dass das Fusionieren der Objektwahrscheinlichkeitsverteilung mit der Hinderniswahrscheinlichkeitsverteilung anhand des Satzes von Bayes, $P(A|B) = P(B|A) \cdot P(A) / P(B)$ ausführbar ist, wobei $P(A|B)$ der "neue" Wert einer Zelle der Hinderniswahrscheinlichkeit ist, $P(B|A)$ die Objektwahrscheinlichkeit an dem Ort der Zelle ist, $P(A)$ der "alte" Wert der Zelle der Hinderniswahrscheinlichkeit ist, und $P(B)$ ein Normierungsfaktor ist, für den gilt $P(B) = P(B|A) \cdot P(A) + (1 - P(B|A)) \cdot (1 - P(A))$.

Die Erfindung wird nachfolgend anhand eines bevorzugten Ausführungsbeispiels unter Bezugnahme auf eine Zeichnung näher erläutert. Die Figuren zeigen:

Fig. 1   eine schematische Ansicht von Laufzeitmessmitteln zur Verdeutlichung einer Signallaufzeitmessung und Erstellung einer Objektwahrscheinlichkeitsverteilung;

Fig. 2   eine andere schematische Ansicht von Laufzeitmessmitteln zur Veranschaulichung der Fusion zweier Objektwahrscheinlichkeitsverteilungen zu einer Hinderniswahrscheinlichkeitsverteilung;

Fig. 3   ein schematisches Blockschaltbild einer Vorrichtung zum Bestimmen von Freiflächen in der Umgebung eines Kraftfahrzeugs; und

Fig. 4   eine dreidimensionale Darstellung einer Objektwahrscheinlichkeitsverteilung.

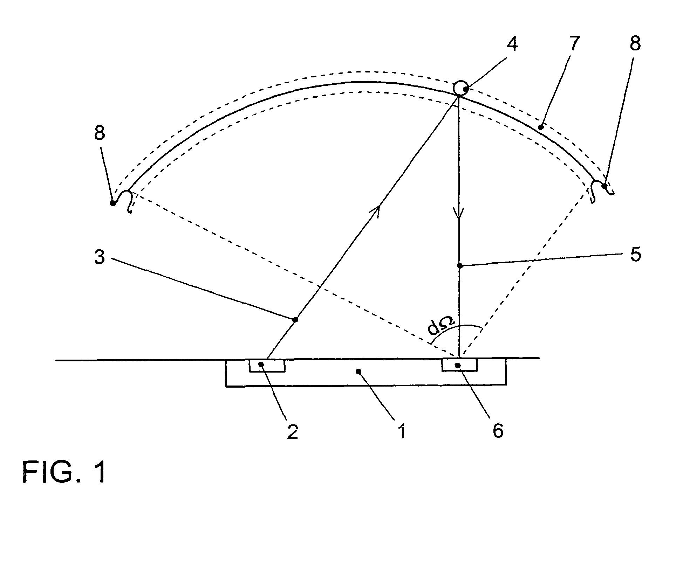

Fig. 1 zeigt eine schematische Ansicht von Laufzeitmessmitteln 1. Die Laufzeitmessmittel 1 umfassen einen Aktor 2. Der Aktor 2 sendet ein in der Regel gepulstes Aktorsignal 3 aus, welches von einem Objekt 4 zumindest teilweise reflektiert wird. Ein reflektierter Signalanteil 5 wird von einem Sensor 6 empfangen. Anhand einer Signallaufzeit wird von Verteilungsbestimmungsmitteln (nicht dargestellt) eine Objektwahrscheinlichkeitsverteilung 7 bestimmt. In einer zweidimensionalen Ebene besitzt sie die Form eines unscharfen Ellipsenabschnitts. Die Größe des Ellipsenabschnitts ist im Wesentlichen über einen Empfangswinkel $d\Omega$ festgelegt, der auch die Apertur der Laufzeitmessmittel 1 und somit die Auflösung der Messung bestimmt. Die Unschärfe wird beispielsweise durch eine Geschwindigkeit der Laufzeitmessmittel 1 relativ zu dem Hindernis 4, die Form und Art des Aktorsignals 3, eine Oberflächenbeschaffenheit des Hindernisses 4, eine Auswerteelektronik (nicht dargestellt) der Laufzeitmessmittel 1 und insbesondere die ermittelte Laufzeit selbst beeinflusst. Die Unschärfe weist in der Regel, wie angedeutet, die Form einer Gaussverteilung 8 auf. Diese muss jedoch nicht über den gesamten Empfangswinkel $d\Omega$ gleich sein.

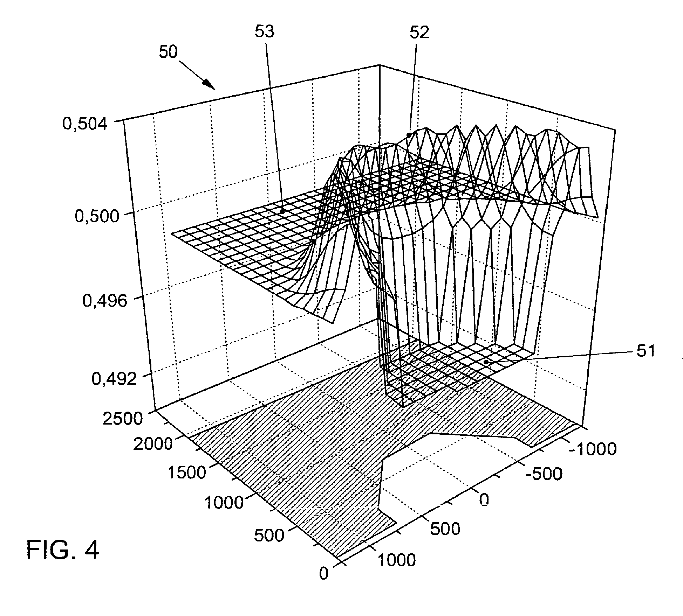

Bei einer alternativen Ausführungsform, bei der ein Aktor und ein Sensor nahe beieinander angeordnet sind, erhält die Objektwahrscheinlichkeitsverteilung die Form eines unscharfen Kreissektors mit einem Empfangswinkel, der in einer Ebene beispielsweise 180° beträgt. Mit einem großen Empfangswinkel ist die Erfassung eines großen Messbereichs möglich. Eine etwas komplexere Objektwahrscheinlichkeitsverteilung 50 einer Signallaufzeitmessung ist in Fig. 4 dargestellt. In einem Nahbereich 51 nahe zu dem Aktor/Sensor ist die Wahrscheinlichkeit ein Hindernis anzutreffen am geringsten. Dieser Nahbereich wird durch einen halbkreisförmigen "Wall" 52 abgegrenzt. Ein Scheitel des "Walls" 52 gibt einen Bereich an, an dem die Wahrscheinlichkeit ein Hindernis vorzufinden am größten ist. Der "Wall" 52 fällt zu größeren Entfernungen von dem Aktor/Sensor auf einen Wert ab, der ein Gebiet 53 kennzeichnet, über den die Messung keine Aussage bezüglich eines Vorliegens von Hindernissen geben kann.

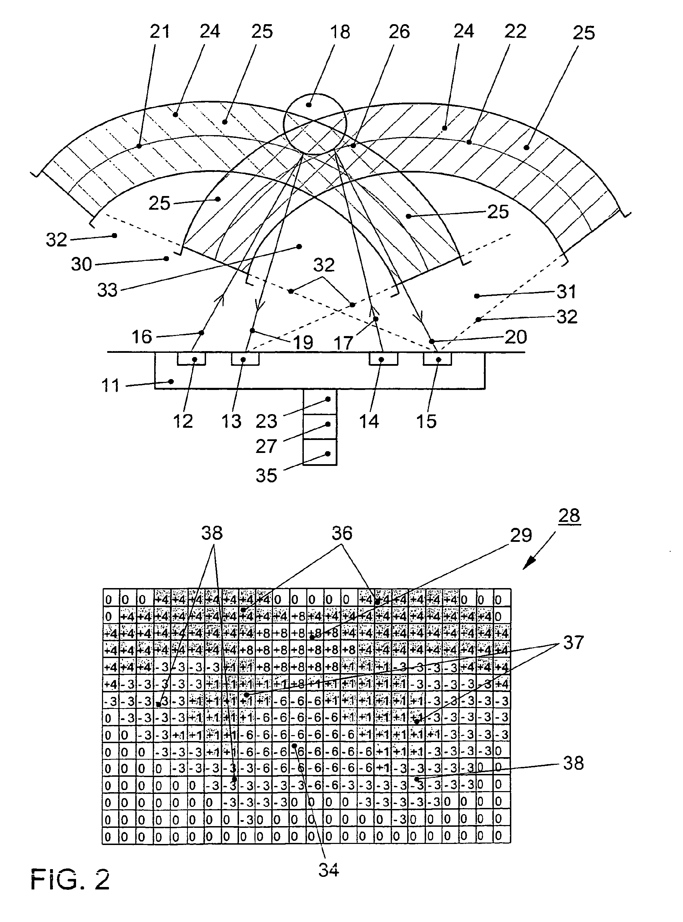

In Fig.2 ist eine andere Ausführungsform von Laufzeitmitteln 11 schematisch dargestellt. Zusätzlich zu einem Aktor 12 und einem Sensor 13 umfassen die Laufzeitmittel 11 einen weiteren Aktor 14 und einen weiteren Sensor 15. Der Aktor 12 und der weitere Aktor 14 Senden jeweils ein Aktorsignal 16 bzw. ein weiteres Aktorsignal 17 aus. Die Aktorsignale 16, 17 werden an einem Hindernis 18 zumindest teilweise reflektiert. Das reflektierte Aktorsignal 19 wird von dem Sensor 13 und das weitere reflektierte Aktorsignal 20 von dem weiteren Sensor 15 empfangen. Anhand der Signallaufzeitmessung des Aktor/Sensor-Paars 12/13 wird eine Objektwahrscheinlichkeitsverteilung 21 und anhand der Signallaufzeitmessung des weiteren Aktor/Sensor-Paars 14/15 eine nachfolgende Objektwahrscheinlichkeitsverteilung 22 bestimmt. Selbst wenn die Objektverteilungswahrscheinlichkeiten zeitgleich ausgeführt werden, können sie als aufeinander folgende Signallaufzeitmessungen betrachtet werden. Zur einfacheren Veranschaulichung sind die Objektwahrscheinlichkeitsverteilungen 21, 22 rechteckförmig verbreitert, wie in Fig. 2 angedeutet ist. Die Objektwahrscheinlichkeitsverteilungen 21, 22 werden mit Hilfe von Verteilungsbestimmungsmittel 23 bestimmt.

Die Objektwahrscheinlichkeitsverteilungen 21, 22 werden mit einer Hinderniswahrscheinlichkeitsverteilung 24, die hier zur Veranschaulichung teilweise mittels einer Schraffur angegeben ist, fusioniert. Hierbei wird davon ausgegangen, dass die Hinderniswahrscheinlichkeit 24 vor einem Fusionieren mit den aufeinander folgenden gemessenen bzw. bestimmten Objektwahrscheinlichkeitsverteilungen über die gesamte Umgebung des Fahrzeugs einen vorgegebenen einheitlichen Wert aufweist. Die Strichdichte pro Fläche ist ein Maß für die Wahrscheinlichkeit ein Hindernis vorzufinden. Einfach schraffierte Bereiche 25 entsprechen Wahrscheinlichkeitswerten, die eine gewisse Wahrscheinlichkeit für das Vorhandensein eines Hindernisses angeben. Ein gekreuzt schraffierter Bereich 26 gibt einen Bereich an, in dem die Hinderniswahrscheinlichkeitsverteilung 24 einen höheren Wahrscheinlichkeitswert aufweist. Dies bedeutet, dass die Wahrscheinlichkeit, ein Hindernis anzutreffen, im gekreuzt schraffierten Bereich 26 am höchsten ist. Die Fusionierung erfolgt mit Hilfe von Katenmitteln 27.

Die Hinderniswahrscheinlichkeitsverteilung 24 wird durch eine zelluläre Umgebungskarte 28 einer Umgebung eines Kraftfahrzeugs (nicht dargestellt), an dem die Laufzeitmessmittel 11 angeordnet sind, repräsentiert. In dem hier beschriebenen Beispiel entsprechen Zellen 29 Orten, an denen die höchste Hinderniswahrscheinlichkeit festgestellt wurde. Von einem Ausgangswert (der hier 0 ist) ausgehend ist ein Belegungswert der Zellen 29 durch die Fusionierung der Objektwahrscheinlichkeitsverteilungen 20, 21 entsprechend um einen Wert +8 erhöht worden.

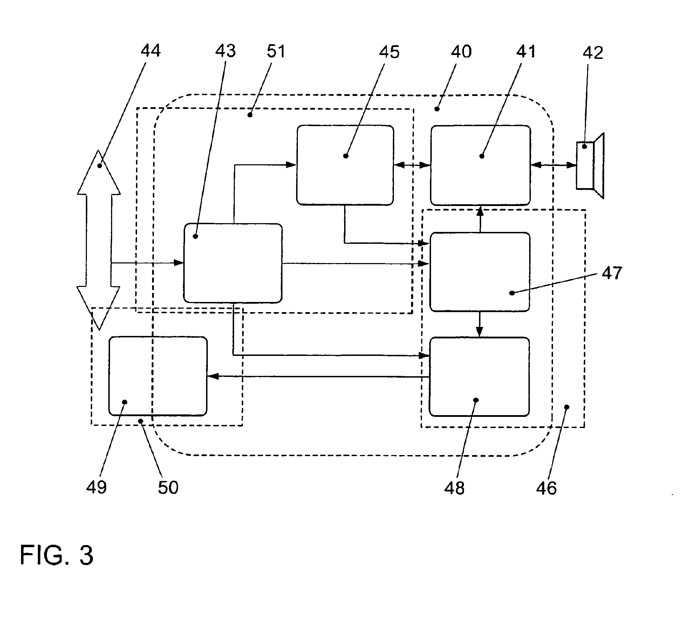

Grenzen von Messbereichen 30 und 31 des Aktor/Sensor-Paars 12/13 bzw. des Aktor/Sensor-Paars 14/15 sind jeweils mittels gestrichelter Linien 32 angezeigt. Eine Wahrscheinlichkeit, ein Hindernis vorzufinden, ist in einem Überlappungsbereich 33 der beiden Messbereiche 30, 31, welcher zusätzlich durch die beiden Objektwahrscheinlichkeitsverteilungen 21, 22 "begrenzt" wird, besonders gering. Daher sind die Belegungswerte von Zellen 34, die diesem Überlappungsbereich 33 zugeordnet sind, um einen Wert -6 verringert worden. Bei der hier gewählten Fusionierung werden die Belegungswerte von Zellen, die laut Objektwahrscheinlichkeitsverteilung einer Signallaufzeitmessung als "frei" gelten, um einen Wert -3 verringert. Belegungswerte von Zellen, die als "belegt", d. h., als mit einem Hindernis versehen gelten, werden um +4 erhöht. Die Belegungswerte von Zellen, für die die Objektwahrscheinlichkeitsverteilung eine mittlere Wahrscheinlichkeit angibt, ein Hindernis vorzufinden, werden nicht verändert. Diese sind Zellen, die außerhalb des Messbereichs der Signallaufzeitmessung liegen, für die die Objektwahrscheinlichkeitsverteilung 21 bzw. 22 bestimmt wurde, oder "hinter" den Zellen liegen, für die die Objektwahrscheinlichkeitsverteilung 21 bzw. 22 eine hohe Wahrscheinlichkeit, ein Hindernis zu finden, angibt. So ergibt sich nach einer Fusionierung der beiden Objektwahrscheinlichkeitsverteilungen 21, 22 die von der Umgebungskarte 28 repräsentierte vollständige Hinderniswahrscheinlichkeit. In ihr sind neben den Zellen 29 und 34, die in beiden Objektwahrscheinlichkeitsverteilungen 21, 22 als frei bzw. belegt angegeben werden, Zellen 36 mit einem Belegungswert +4 vorhanden, die von einer der Objektwahrscheinlichkeitsverteilungen als belegt gekennzeichnet sind und über die die jeweils andere Objektwahrscheinlichkeitsverteilung keine Angabe macht, weil sie nicht im Messbereich liegen oder "hinter" dem Bereich liegen, der als belegt gekennzeichnet ist. Ferner gibt es Zellen 37 mit einem Belegungswert +1, die von einer der Objektwahrscheinlichkeitsverteilungen 21, 22 als belegt und von der anderen als frei angegeben werden. Außerdem gibt es Zellen 38 mit einem Belegungswert -3, die in einer der Objektwahrscheinlichkeitsverteilungen 21, 22 als frei gelten und über die die andere der Objektwahrscheinlichkeitsverteilungen 21, 22 keine Aussage trifft. Grundsätzlich gibt die hier beschriebene Fusionierung nur eine mögliche Art an, die Objektwahrscheinlichkeitsverteilungen mit der Hinderniswahrscheinlichkeit zu fusionieren. Es sind auch andere Fusionierungen möglich. Beispielsweise kann eine Fusionierung gemäß dem Satz von Bayes erfolgen, wie oben beschrieben wurde. Insbesondere können zeitlich versetzt aufgenommene Signallaufzeitmessungen ein und desselben Aktor/Sensor-Paares fusioniert werden, wobei eine Stellungsveränderung gegenüber der Umgebung berücksichtigt wird. Eine solche Fusion wird unten im Zusammenhang mit Fig.3 näher beschrieben. Ferner kann mittels Konsistenzprüfungsmitteln 35 überprüft werden, ob eine fehlerhafte Signallaufzeitmessung stattgefunden hat oder ein Aktor/Sensor-Ausfall vorliegt.

Fig.3 zeigt eine schematische Darstellung einer Vorrichtung 40 zum Bestimmen von Freiflächen in einer Umgebung eines Kraftfahrzeugs. Die Vorrichtung 40 umfasst Laufzeitmessmittel 41. Diese führen Signallaufzeitmessungen durch. Die Laufzeitmessmittel 41 können ein oder mehrere Aktor/Sensor-Paare 42 umfassen. Im Folgenden wird angenommen, dass nur ein Aktor/Sensor-Paar 42 umfasst ist, in dem der Aktor und der Sensor einstückig ausgebildet sind. Um Objektwahrscheinlichkeitsverteilungen für unterschiedliche Detektionsgeometrien zu erhalten, ist es bei dieser Ausführungsform somit notwendig, dass sich das Kraftfahrzeug relativ zu seiner Umgebung bewegt. Diese Bewegung wird mittels einer Positionsermittlungsvorrichtung 43 erfasst. Die Positionsermittlungsvorrichtung 43 kann als GPS-Modul ausgebildet sein. Vorteilhafterweise ist sie jedoch als so genannte Koppelvorrichtung ausgebildet, die die Positionsveränderungen auf Basis von Messwerten ableitet, die im Kraftfahrzeug erhoben werden und mittels eines Bussystems, das hier als CAN-Bus 44 ausgestaltet ist, der Positionsermittlungsvorrichtung 43 zur Verfügung gestellt werden. Die zurückgelegte Strecke sowie die Geschwindigkeit des Kraftfahrzeugs kann beispielsweise mit Hilfe von Radimpulssensoren, Lenkwinkelsensoren und/oder einem Gyroskop usw. ermittelt werden.

Die Bewegungsinformationen werden gemeinsam mit den Signallaufzeitmessdaten an Kartenmittel 45 geliefert. Die Kartenmittel 45 umfassen in dieser Ausführungsform Verteilungsbestimmungsmittel (nicht dargestellt), die zum einen aus den Signallaufzeitmessdaten Objektwahrscheinlichkeitsverteilungen bestimmen. Die Kartenmittel 45 fusionieren die Objektwahrscheinlichkeitsverteilungen unter Berücksichtigung der Bewegungsinformationen mit der Hinderniswahrscheinlichkeitsverteilung. Über die zu den Bewegungsinformationen gehörende Geschwindigkeit des Kraftfahrzeugs während einer Signallaufzeitmessung wird eine Unschärfe der Objektwahrscheinlichkeitsverteilung beeinflusst. Ferner liefern die Informationen über die zurückgelegte Strecke (Richtung/Entfernung) die notwendigen Informationen, um jeweils eine Fusion zweier oder mehrerer Objektwahrscheinlichkeitsverteilungen in räumlicher Hinsicht mit der Hinderniswahrscheinlichkeitsverteilung zu ermöglichen. Konsistenzprüfungsmittel (nicht dargestellt) überprüfen die Konsistenz der Signallaufzeitmessdaten und/oder der Objektwahrscheinlichkeitsverteilungen. Die Kartenmittel 45 erstellen die Hinderniswahrscheinlichkeitsverteilung, die eine Umgebungskarte des Kraftfahrzeugs darstellt. Für Zellen, die eine hohe Objektwahrscheinlichkeit aufweisen, wird ein Belegungswert erhöht, für Zellen, die eine geringe Objektwahrscheinlichkeit aufweisen, wird der Belegungswert verringert. Zellen, die in einem Messbereich der fusionierten Signallaufzeitmessungen dichter an dem Kraftfahrzeug liegen als ein erstes mögliches Hindernis, weisen eine geringe Hinderniswahrscheinlichkeit auf. Hierbei ist jedoch ein möglicherweise in unmittelbarer Nähe des Kraftfahrzeugs für das Aktor/Sensor-Paar 42 existierender Blindbereich zu berücksichtigen. Auf diese Weise wird aus vielen Signallaufzeitmessungen eine Umgebungskarte des Kraftfahrzeugs erstellt.

Eine Steuereinheit 46 umfasst eine Lageüberarbeitungseinheit 47. Diese umfasst Flächenermittlungsmittel (nicht dargestellt). Die Flächenermittlungsmittel bestimmen Freiflächen anhand der Umgebungskarte in der Umgebung des Kraftfahrzeugs. Als eine Freifläche wird in diesem Zusammenhang ein Gebiet angesehen, dessen Zellen einen Belegungswert unterhalb eines festgelegten so genannten Freiwerts aufweisen. Andererseits können Zellen, deren Belegungswert oberhalb eines Hindernisschwellenwertes liegt, einem Hindernisbereich zugeordnet werden. Die Lageüberarbeitungseinheit 47 kann auf die Laufzeitmessmittel 41 zurückwirken, indem beispielsweise Filterwerte für die Signalverarbeitung verändert werden.

Die Informationen über die Freiflächen und Hindernisbereiche werden an eine Auftreffbeurteilungseinheit 48 weitergeleitet. Ferner werden die Bewegungsinformationen der Positionsermittlungsvorrichtung 43 an die Auftreffbeurteilungseinheit 48 weitergeleitet. Die Auftreffbeurteilungseinheit 48 umfasst Aktionsmittel, die bei einer Annäherung und/oder einer möglichen Annäherung des Kraftfahrzeugs oder eines Kraftfahrzeugteils an ein Hindernis und beim Verlassen der bestimmten Freiflächen eine Warnung oder ein verarbeitbares Signal erzeugen. Dieses wird über eine Ausgabeeinheit 49 einer Mensch-Maschine-Schnittstelle 50 ausgegeben.

Die Steuereinheit 46 kann ferner so ausgestaltet sein, dass sie die Freifläche nach einer geeigneten Parklücke absucht und anschließend über die Mensch-Maschine-Schnittstelle 50 Einparkhilfen zur Verfügung stellt oder direkt ein Einparkmanöver ganz oder teilweise steuert. Ferner können die Informationen der Umgebungskarte auch nach dem Abstellen des Kraftfahrzeugs weiter gespeichert bleiben. So kann ein Ausparkvorgang auf Basis der gespeicherten Umgebungskarte ausgeführt oder unterstützt werden. Die Positionsermittlungsvorrichtung 43 und die Kartenmittel 45 sind zu einem Kern 51 zusammengefasst.

Die Ausführungsformen wurden bisher nur für ein zweidimensionales Erfassen von Objekten/Hindernissen und Freiflächen beschrieben. Die Erfindung kann jedoch auch für die dreidimensionale Erfassung der Umgebung eingesetzt werden. So können überhängende und flache Hindernisse erkannt und unterschieden werden. Der Begriff Freifläche ist im dreidimensionalen Fall gleichbedeutend mit dem Begriff Freivolumen.

Andere Ausführungsformen sehen vor, dass die Informationen über Freiflächen von der Steuereinheit verwendet werden, um in anderen Situationen Hilfestellungen zu geben oder aktiv steuernd einzugreifen.

Die verschiedenen Anwendungen für diese Ausführungsformen lassen sich hinsichtlich der Geschwindigkeit des Kraftfahrzeugs gruppieren. Bei niedrigen Geschwindigkeiten oder einem Stillstand des Kraftfahrzeugs kann die Information über die Freiflächen für ein Manövrieren, ein punktgenaues Anfahren von Gegenständen (einer Zapfsäule, eines Ticketautomaten usw.), zur Deichselerkennung beim Ankoppeln eines Anhängers, zum Deaktivieren einer Alarmanlage bei einem Einkaufswagen-Unfall, zum Erkennen von Gräben, zum Ausgeben von Anfahr- oder Rollwarnungen an Ampeln oder beim Stopand-go-Verkehr, für einen aktiven Schutz bei Zusammenstößen, zur Warnung vor Fußgängern und Fahrradfahrern beispielsweise beim Abbiegen usw. verwendet werden. Bei einem abgestellten Kraftfahrzeug kann der Türöffnungswinkel begrenzt werden oder das Kraftfahrzeug angehoben und abgesenkt werden, falls ein Bordstein ermittelt wurde, der eine Türöffnung ansonsten nicht zuließe.

Bei normaler Fahrtgeschwindigkeit können die Informationen über die Freiflächen für eine Lückenerkennung, zum Bewerten von Ausweichalternativen bei einem aktiven Kollisionsschutz und für eine Einspurfunktion eines Einfädel-/Einspurassistenten verwendet werden.

Die Steuereinheit kann jeweils so ausgestaltet sein, dass sie Hilfestellungen bei den einzelnen Vorgängen anbietet und/oder selbstständig steuernd und regelnd aktiv eingreift. So sieht eine Ausführungsform vor, dass bei einem Spurwechsel oder beim Einfädeln im fließenden Verkehr eine Warnung ausgegeben wird, wenn keine ausreichende Freifläche für das entsprechende Manöver vorhanden ist. Alternativ oder zusätzlich kann ein solches Manöver vollständig oder teilweise aktiv mittels der Steuereinheit gesteuert werden. Ferner kann ein unbeabsichtigtes Verlassen einer Fahrspur frühzeitig erkannt werden und eine Warnung ausgegeben werden oder in die Steuerung des Kraftfahrzeugs aktiv eingegriffen werden.

Die beschriebenen Verwendungen sind nur beispielhaft aufgeführt. Weitere sinnvolle Verwendungen der Erfindung existieren.

In der Beschreibung wurden die Bestimmung der Objektwahrscheinlichkeitsverteilungen und die Fusionierung mit der Hinderniswahrscheinlichkeitsverteilung, d. h. das Erstellen der Umgebungskarte, jeweils als getrennte Schritte beschreiben. Es ergibt sich jedoch für den Fachmann, dass einzelne Schritte, insbesondere bei einer Ausgestaltung in Software, zusammengefasst oder nicht klar voneinander getrennt werden können.

**Patentansprüche**

1.  Verfahren zum Bestimmen von Freiflächen in einer Umgebung eines Kraftfahrzeugs, bei dem folgende Schritte iteriert werden:

    a. Durchführen einer Signallaufzeitmessung zum Vermessen von Objekten (4) in der Umgebung des Kraftfahrzeugs;
    b. Bestimmen einer Objektwahrscheintichkeitsverteilung (21, 22) anhand des Ergebnisses der Signallaufzeitmessung in Form eines Kreissektors, wobei sich ein Aktor als ein Sender und ein Sensor als ein Empfänger am selben Ort befinden, oder eines Sektors oder eines Abschnitts einer unscharfen Ellipse, in deren einen Fokus sich der Aktor als der Sender und in deren anderen Fokus sich der Sensor als der Empfänger befindet, wobei die Objektwahrscheinlichkeit so bestimmt wird, dass die Objektwahrscheinlichkeitsverteilung eine gaussförmige Unschärfe um den Ellipsenabschnitt bzw. -Sektor oder Kreissektor aufweist ; und
    c. Fusionieren der Objektwahrscheinlichkeitsverteilung (21, 22) mit einer Hinderniswahrscheinlichkeitsverteilung (24), wobei die Hinderniswahrscheinlichkeitsverteilung (24) mittels einer zellulären Umgebungskarte (28) des Kraftfahrzeugs repräsentiert wird und beim Fusionieren Belegungswerte der Zellen (29, 24) verringert und/ oder erhöht werden und wobei die Zellen (29, 24, 36) ursprünglich einen vorgegebenen Belegungswert aufweisen,.

2.  Verfahren nach Anspruch 1, **dadurch gekennzeichnet, dass** bei der Bestimmung der Objektwahrscheinlichkeitsverteilung (21, 22) eine Detektionsgeometrie berücksichtigt wird.

3.  Verfahren nach Anspruch 1 oder 2, **dadurch gekennzeichnet, dass** die Objektwahrscheinlichkeit so bestimmt wird, dass die Unschärfe um den Ellipsenabschnitt abhängig von der ermittelten Laufzeit der Signallaufzeitmessung ist.

4.  Verfahren nach einem der Ansprüche 1 bis 3, **dadurch gekennzeichnet, dass** die Objektwahrscheinlichkeit so bestimmt wird, dassdie Unschärfe um den Ellipsenabschnitt abhängig von einer Geschwindigkeit der zum Ausführen der Signallaufzeitmessung verwendeten Laufzeitmessmittel (1) ist.

5.  Verfahren nach einem der vorangehenden Anspürche, **dadurch gekennzeichnet, dass** die Detektionsgeometrie einer nachfolgenden Signallaufzeitmessung verändert wird.

6.  Verfahren nach einem der vorangehenden Ansprüche, **dadurch gekennzeichnet, dass** bei der Fusionierung der Objektwahrscheinlichkeitsverteilung (21, 22) mit der Hinderniswahrscheinlichkeitsverteilung (24) eine Konsistenzüberprüfung der Objektwahrscheinlichkeitsverteilung (21) und einer vorangehenden Objektwahrscheinlichkeitsverteilung (22) vorgenommen wird

7.  Verfahren nach einem der vorangehenden Ansprüche, **dadurch gekennzeichnet, dass** die Signallaufzeitmessung und die nachfolgende Signallaufzeitmessung mit demselben Sensor (6) durchgeführt werden.

8.  Verfahren nach einem der vorangehenden Ansprüche, **dadurch gekennzeichnet, dass** eine relative Stellung zwischen einem Aktor (2; 12, 14) und/oder einem Sensor (6; 13, 15) und/oder der Umgebung des Kraftfahrzeugs zwischen der Signallaufzeitmessung und der nachfolgenden Signallaufzeitmessung verändert wird.

9.  Verfahren nach einem der vorangehenden Ansprüche, **dadurch gekennzeichnet, dass** ein Aktor (12) für die Signallaufzeitmessung und ein weiterer Aktor (14) für die nachfolgende Signallaufzeitmessung verwendet werden, wobei die Aktoren (12, 14) voneinander beabstandet an dem Kraftfahrzeug angeordnet sind.

10. Verfahren nach einem der vorangehenden Ansprüche, **dadurch gekennzeichnet, dass** für die Signallaufzeitmessung und für die nachfolgende Signallaufzeitmessung derselbe Aktor (2) verwendet wird.

**11.** Verfahren nach einem der vorangehenden Ansprüche **dadurch gekennzeichnet, dass** das Kraftfahrzeug mit dem/n daran angeordneten Sensor/en (6; 13; 15) und dem/n Aktor/en (2; 12, 14) seine Position zwischen den Signallaufzeitmessungen verändert.

**12.** Verfahren nach einem der Ansprüche 1 bis 9, **dadurch gekennzeichnet, dass** die Signallaufzeitmessung mit dem Aktor (12) und dem Sensor (13) und die nachfolgende Signallaufzeitmessung mit dem weiteren Aktor (14) und dem weiteren Sensor (15) ausgeführt werden.

**13.** Verfahren nach einem der vorangehenden Ansprüche, **dadurch gekennzeichnet, dass** die Signallaufzeitmessung und die nachfolgende Signallaufzeitmessung zeitlich versetzt oder zeitgleich ausgeführt werden, wobei bei zeitgleicher Ausführung der Signallaufzeitmessungen Aktorsignale (16, 17) mit unterschiedlichen Kennungen oder unterschiedlicher Art verwendet werden und wobei die zeitgleich ausgeführten Signallaufzeitmessungen wie einzelne Iterationsschritte behandelt werden.

**14.** Verfahren nach einem der vorangehenden Ansprüche, **dadurch gekennzeichnet, dass** die Aktoren (2; 12, 14) Ultraschallsignale aussenden und die Sensoren (6; 13; 15) Ultraschallsignale empfangen und/oder die Aktoren (2; 12, 14) elektromagnetische Strahlung aussenden und die Sensoren (6; 13; 15) elektromagnetische Strahlung empfangen.

**15.** Verfahren nach einem der vorangehenden Ansprüche, **dadurch gekennzeichnet, dass** in der Umgebungskarte Freiflächen anhand zusammenhängender Zellen mit einem Belegungswert unterhalb eines vorgegebenen Freiwertes ermittelt werden.

**16.** Verfahren nach Anspruch 15, **dadurch gekennzeichnet, dass** die ermittelten Freiflächen als Grundlage zum Steuern eines Einparkmanövers, eines Ausparkmanövers, eines Spurwechsel- oder eines anderen Fahrmanövers des Kraftfahrzeugs oder eines Kraftfahrzeugzustands verwendet werden.

**17.** Verfahren nach einem der vorangehenden Ansprüche, **dadurch gekennzeichnet, dass** bei einer Annäherung und/oder einer möglichen Annäherung des Kraftfahrzeugs oder eines Kraftfahrzeugteils an eine Position, deren entsprechende Zelle in der Umgebungskarte (28) einen Belegungswert oberhalb eines Auslöseschwellenwertes aufweist, eine Aktion ausgelöst wird.

**18.** Verfahren nach Anspruch 15, **dadurch gekennzeichnet, dass** die Aktion ein Ausgeben einer Warnung und/oder eines verarbeitbaren Signals umfasst.

**19.** Verfahren nach einem der vorangehenden Ansprüche, **dadurch gekennzeichnet, dass** die Bewegung des Kraftfahrzeugs erfasst wird und beim Fusionieren der Objektwahrscheinlichkeitsverteilung (21, 22) mit der Hinderniswahrscheinlichkeit (24) berücksichtigt wird.

**20.** Verfahren nach einem der vorangehenden Ansprüche, **dadurch gekennzeichnet, dass** das Fusionieren der Objektwahrscheinlichkeitsverteilung (21, 22) mit der Hinderniswahrscheinlichkeitsverteilung (24) anhand des Satzes von Bayes, $P(A|B) = P(B|A) \cdot P(A) / P(B)$, erfolgt wobei $P(A|B)$ der "neue" Wert einer Zelle der Hinderniswahrscheinlichkeit (24) ist, $P(B|A)$ die Objektwahrscheinlichkeit (21, 22) an dem Ort der Zelle ist, $P(A)$ der "alte" Wert der Zelle der Hinderniswahrscheinlichkeit (24) ist, und $P(B)$ ein Normierungsfaktor ist, für den gilt: $P(B) = P(B|A) \cdot P(A) + (1 - P(B|A)) \cdot (1 - P(A))$.

**21.** Vorrichtung (40) zum Bestimmen von Freiflächen in einer Umgebung eines Kraftfahrzeugs umfassend:

 d. Laufzeitmessmittel (1; 11; 41) zum Durchführen einer Signallaufzeitmessung zum Vermessen von Objekten (4) in der Umgebung des Kraftfahrzeugs;
 e. Verteilungsbestimmungsmittel (23) zum Bestimmen einer Objektwahrscheinlichkeitsverteilung (21, 22)) anhand des Ergebnisses der Signallaufzeitmessung in Form eines Kreissektors, wobei sich ein Aktor als ein Sender und ein Sensor als ein Empfänger am selben Ort befinden, oder eines Sektors oder eines Abschnitts einer unscharfen Ellipse, in deren einen Fokus sich der Aktor als der Sender und in deren anderen Fokus sich der Sensor als der Empfänger befindet, wobei die Objektwahrscheinlichkeit so bestimmt wird, dass die Objektwahrscheinlichkeitsverteilung eine gaussförmige Unschärfe um den Ellipsenabschnitt bzw.-Sektor oder Kreissektor aufweist ;
 f. Kartenmittel (45) zum Fusionieren der Objektwahrscheinlichkeitsverteilung (21, 22) mit einer Hinderniswahrscheinlichkeitsverteilung (24), wobei die Hinderniswahrscheinlichkeitsverteilung (24) mittels einer zellulären Umgebungskarte (28) des Kraftfahrzeugs repräsentiert ist und beim Fusionieren Belegungswerte der Zellen (29, 34) verringerbar und/oder erhöhbar sind, wobei die Zellen (29, 34, 36) ursprünglich einen vorgegebenen Belegungswert aufweisen; und

g. Iterationsmittel, die so ausgestaltet sind, dass iterativ Signallaufzeitmessungen, die Bestimmung der entsprechenden Objektwahrscheinlichkeitsverteilungen (21, 22) und das Fusionieren mit der Hinderniswahrscheinlichkeitsverteilung (24) ausführbar sind.

22. Vorrichtung (40) nach Anspruch 21, **dadurch gekennzeichnet, dass** die Verteilungsbestimmungsmittel (23) so ausgestaltet sind, dass bei der Bestimmung der Objektwahrscheinlichkeitsverteilung (21, 22) eine Detektionsgeometrie berücksichtigbar ist.

23. Vorrichtung (40) nach einem der Ansprüche 21 oder 22, **dadurch gekennzeichnet, dass** die Verteilungsbestimmungsmittel (23) so ausgestaltet sind, dass die Unschärfe um den Ellipsenabschnitt abhängig von der ermittelten Laufzeit der Signallaufzeitmessung ist.

24. Vorrichtung (40) nach einem der Ansprüche 21 bis 23, **dadurch gekennzeichnet, dass** die Verteilungsbestimmungsmittel (23) so ausgestaltet sind, dass die Unschärfe um den Ellipsenabschnitts abhängig von einer Geschwindigkeit der zum Ausführen der Signallaufzeitmessung verwendeten Laufzeitmessmittel (1) ist.

25. Vorrichtung (40) nach einem der Ansprüche 21 bis 24, **gekennzeichnet durch** Konsistenzprüfungsmittel (35), mittels derer bei der Fusionierung der Objektwahrscheinlichkeitsverteilung (21, 22) mit der Hinderniswahrscheinlichkeitsverteilung (24) eine Konsistenzüberprüfung der Objektwahrscheinlichkeitsverteilung (21) und einer vorangehenden Objektwahrscheinlichkeitsverteilung (22) vornehmbar ist, um Detektionsfehler aufzuspüren und/oder einen Ausfall einzelner Komponenten der Signallaufzeitmessmittel festzustellen.

26. Vorrichtung (40) nach einem der Ansprüche 21 bis 25, **dadurch gekennzeichnet, dass** die Laufzeitmessmittel (1; 11; 41) einen Aktor (2; 12, 14) und einen Sensor (6; 13; 15) umfassen.

27. Vorrichtung (40) nach einem der Ansprüche 21 bis 26, **dadurch gekennzeichnet, dass** eine relative Stellung zwischen dem Aktor (2; 12, 14) und/oder dem Sensor (6; 13; 15) und/oder der Umgebung des Kraftfahrzeugs zwischen der Signallaufzeitmessung und der nachfolgenden Signallaufzeitmessung veränderbar ist.

28. Vorrichtung (40) nach einem der Ansprüche 21 bis 27, **dadurch gekennzeichnet, dass** der Aktor (2; 12, 14) und der Sensor (6; 13; 15) an dem Kraftfahrzeug angeordnet sind und eine Positionsbestimmungsvorrichtung (43) vorgesehen ist, mittels der eine Veränderung der Kraftfahrzeugposition relativ zu der Umgebung ermittelbar ist.

29. Vorrichtung (40) nach einem der Ansprüche 21 bis 28, **dadurch gekennzeichnet, dass** Laufzeitmessmittel (1; 11; 41) einen weiteren Sensor (15) umfassen, der von dem Sensor (13) beabstandet angeordnet ist.

30. Vorrichtung (40) nach einem der Ansprüche 21 bis 29, **dadurch gekennzeichnet, dass** die Laufzeitmessmittel (1; 11; 41) einen weiteren Aktor (2; 12, 14) umfassen, der von dem Aktor (2; 12) beabstandet angeordnet ist.

31. Vorrichtung (40) nach einem der Ansprüche 21 bis 30, **dadurch gekennzeichnet, dass** die Signallaufzeitmessung mit dem Aktor (2; 12) und dem Sensor (6; 13) und die nachfolgende Signallaufzeitmessung mit dem weiteren Aktor (14) und dem weiteren Sensor (15) ausführbar sind.

32. Vorrichtung (40) nach einem der Ansprüche 21 bis 31, **dadurch gekennzeichnet, dass** die die Signallaufzeitmessung und die nachfolgende Signallaufzeitmessung zeitgleich ausführbar sind, wobei von dem Aktor (12) und dem weiteren Aktor (14) Aktorsignale (16, 17) unterschiedlicher Kennung oder unterschiedlicher Art erzeugbar sind und wobei die zeitgleich ausgeführten Signallaufzeitmessungen wie iterative Signallaufzeitmessungen behandelbar sind.

33. Vorrichtung (40) nach einem der Ansprüche 21 bis 32, **dadurch gekennzeichnet, dass** die Laufzeitmessmittel (1; 11; 41) Ultraschall-Aktoren und UltraschallSensoren (6; 13; 15) und/oder Aktoren (2; 12, 14) zum Aussenden von elektromagnetischer Strahlung und Sensoren (6; 13; 15) zum Empfangen elektromagnetischer Strahlung umfassen.

34. Vorrichtung (40) nach einem der Ansprüche 21 bis 33, **dadurch gekennzeichnet, dass** mittels Flächenermittlungsmitteln in der Umgebungskarte Freiflächen anhand zusammenhängender Zellen mit einem Belegungswert unterhalb eines vorgegebenen Freiwertes ermittelbar sind.

35. Vorrichtung (40) nach Anspruch 34, **dadurch gekennzeichnet, dass** eine Steuereinheit (46) ausgestaltet ist, dass auf Grundlage der ermittelten Freiflächen ein Einparkmanöver, ein Ausparkmanöver, ein Spurwechsel- oder ein anderes Fahrmanöver des Kraftfahrzeugs oder ein Kraftfahrzeugzustand steuerbar ist.

36. Vorrichtung (40) nach einem der Ansprüche 21 bis 35, **gekennzeichnet durch** Aktionsmittel, mittels denen bei einer Annäherung und/oder einer möglichen Annäherung des Kraftfahrzeugs oder eines Kraftfahrzeugteils an eine Position, deren entsprechende Zelle in der Umgebungskarte einen Belegungswert oberhalb eines Auslöseschwellenwertes aufweist, eine Aktion auslösbar ist.

37. Vorrichtung (40) nach Anspruch 36, **dadurch gekennzeichnet, dass** die Aktion ein Ausgeben einer Warnung und/oder eines verarbeitbaren Signals umfasst.

38. Vorrichtung (40) nach einem der Ansprüche 21 bis 37, **dadurch gekennzeichnet, dass** die Verteilungsbestimmungsmittel (23) und/oder die Konsistenzprüfungsmittel (35) und/oder die Kartenmittel (45) und/oder die Flächenermittlungsmittel und/oder die Steuereinheit (46) und/oder die Aktionsmittel in Software und/oder Hardware ausgestaltet sind.

39. Vorrichtung (40) nach einem der Ansprüche 21 bis 38, **dadurch gekennzeichnet, dass** das Fusionieren der Objektwahrscheinlichkeitsverteilung mit der Hinderniswahrscheinlichkeitsverteilung anhand des Satzes von Bayes, $P(A|B) = P(B|A) \cdot P(A) / P(B)$ ausführbar ist, wobei $P(A|B)$ der "neue" Wert einer Zelle der Hinderniswahrscheinlichkeit ist, $P(B|A)$ die Objektwahrscheinlichkeit an dem Ort der Zelle ist, $P(A)$ der "alte" Wert der Zelle der Hinderniswahrscheinlichkeit ist, und $P(B)$ ein Normierungsfaktor ist, für den gilt: $P(B) = P(B|A) \cdot P(A) + (1 - P(B|A)) \cdot (1 - P(A))$.

## Claims

1. Method for determining free areas in the surroundings of a motor vehicle, in the case of which the following steps are iterated:

   a. carrying out a signal transit time measurement in order to survey objects (4) in the surroundings of the motor vehicle;
   b. determining an object probability distribution (21, 22) with the aid of the result of the signal transit time measurement in the form of a circle sector, an actuator as a transmitter, and a sensor as a receiver being situated at the same location, or of a sector or a section of a diffuse ellipse at whose one focus the actuator as the transmitter and at whose other focus the sensor as the receiver are situated, the object probability being determined such that the object probability distribution has a Gaussian uncertainty about the ellipse section or sector, or circle sector; and
   c. fusing the object probability distribution (21, 22) with an obstacle probability distribution (24), the obstacle probability distribution (24) being represented by means of a cellular surroundings map (28) of the motor vehicle, and during fusing occupancy values of the cells (29, 34) being decreased and/or increased, and the cells (29, 34, 36) originally having a prescribed occupancy value.

2. Method according to Claim 1, **characterized in that** a detection geometry is taken into account when determining the object probability distribution (21, 22).

3. Method according to Claim 1 or 2, **characterized in that** the object probability is determined such that the diffuseness about the ellipse section is a function of the determined transit time of the signal transit time measurement.

4. Method according to Claims 1 to 3, **characterized in that** the object probability is determined such that the diffuseness about the ellipse section is a function of a speed of the transit time measuring means (1) used to execute the signal transit time measurement.

5. Method according to one of the preceding claims, **characterized in that** the detection geometry of a subsequent signal transit time measurement is altered.

6. Method according to one of the preceding claims, **characterized in that** a consistency check of the object probability distribution (21) and of a preceding object probability distribution (22) is undertaken during the fusing of the object probability distribution (21, 22) with the obstacle probability distribution (24).

7. Method according to one of the preceding claims, **characterized in that** the signal transit time measurement and the subsequent signal transit time measurement are carried out using the same sensor (6).

8. Method according to one of the preceding claims, **characterized in that** a relative position between an actuator (2; 12, 14) and/or a sensor (6; 13, 15) and/or the surroundings of the motor vehicle is altered between the signal transit time measurement and the following signal transit time measurement.

9. Method according to one of the preceding claims, **characterized in that** use is made of an actuator (12) for the signal transit time measurement and of a further actuator (14) for the following signal transit time measurement, the actuators (12,14) being arranged spaced apart from one another on the motor vehicle.

10. Method according to one of the preceding claims, **characterized in that** the same actuator (2) is used for the signal transit time measurement and for the following signal transit time measurement.

11. Method according to one of the preceding claims, **characterized in that**, together with the sensor(s) (6; 13; 15) and the actuator(s) (2; 12, 14) arranged on it, the motor vehicle changes its position between the signal transit time measurements.

12. Method according to one of Claims 1 to 9, **characterized in that** the signal transit time measurement is executed using the actuator (12) and the sensor (13), and the subsequent signal transit time measurement is executed using the further actuator (14) and the further sensor (15).

13. Method according to one of the preceding claims, **characterized in that** the signal transit time measurement and the subsequent signal transit time measurement are executed in a fashion offset in time or simultaneously, use being made, in the case of simultaneous execution of the signal transit time measurements, of actuator signals (16, 17) having different identifiers or being of a different type, and the simultaneously executed signal transit time measurements being treated as individual iteration steps.

14. Method according to one of the preceding claims, **characterized in that** the actuators (2; 12, 14) emit ultrasonic signals and the sensors (6; 13; 15) receive ultrasonic signals and/or the actuators (2; 12, 14) emit electromagnetic radiation and the sensors (6; 13; 15) receive electromagnetic radiation.

15. Method according to one of the preceding claims, **characterized in that** free areas are determined in the surroundings map with the aid of coherent cells with an occupancy value below a prescribed free value.

16. Method according to Claim 15, **characterized in that** the determined free areas are used as a basis for controlling a manoeuvre to occupy a parking space, a manoeuvre to leave a parking space, a manoeuvre to change lanes or another driving manoeuvre of the motor vehicle, or a state of the motor vehicle.

17. Method according to one of the preceding claims, **characterized in that** an action is initiated in the event of an approach and/or of a possible approach of the motor vehicle or a part of the motor vehicle to a position whose corresponding cell in the surroundings map (28) has an occupancy value above an initiation threshold value.

18. Method according to Claim 15, **characterized in that** the action comprises outputting a warning and/or a signal which can be processed.

19. Method according to one of the preceding claims, **characterized in that** the movement of the motor vehicle is detected and taken into account in fusing the object probability distribution (21, 22) with the obstacle probability distribution (24).

20. Method according to one of the preceding claims, **characterized in that** the fusing of the object probability distribution (21, 22) with the obstacle probability distribution (24) is performed with the aid of Bayes' theorem, $P(A|B) = P(B|A) \cdot P(A)/P(B)$, $P(A|B)$ being the "new" value of a cell of the obstacle probability distribution (24), and $P(B|A)$ being the object probability (21, 22) at the location of the cell, $P(A)$ being the "old" value of the cell of the obstacle probability distribution (24), and $P(B)$ being a normalization factor for which it holds that:

$$P(B) = P(B|A) \cdot P(A) + (1 - P(B|A) \cdot (1 - P(A)).$$

21. Device (40) for determining free areas in the surroundings of a motor vehicle, comprising:

    d. transit time measuring means (1; 11; 41) for carrying out a signal transit time measurement in order to survey objects (4) in the surroundings of the motor vehicle;

    e. distribution determining means (23) for determining an object probability distribution (21, 22) with the aid of the result of the signal transit time measurement in the form of a circle sector, an actuator as a transmitter, and a sensor as a receiver being situated at the same location, or of a sector or a section of a diffuse ellipse at whose one focus the actuator as the transmitter and at whose other focus the sensor as the receiver are situated, the object probability being determined such that the object probability distribution has a Gaussian uncertainty about the ellipse section or sector, or circle sector;

    f. mapping means (45) for fusing the object probability distribution (21, 22) with an obstacle probability distribution (24), the obstacle probability distribution (24) being represented by means of a cellular surroundings map (28) of the motor vehicle, and during fusing occupancy values of the cells (29, 34) being able to be decreased and/or increased, and the cells (29, 34, 36) originally having a prescribed occupancy value; and

    g. iteration means which are configured such that signal transit time measurements, the determination of the corresponding object probability distributions (21, 22) and the fusion with the obstacle probability distribution (24) can be executed by iteration.

22. Device (40) according to Claim 21, **characterized in that** the distribution determining means (23) are configured such that a detection geometry can be taken into account when determining the object probability distribution (21, 22).

23. Device (40) according to either of Claims 21 or 22, **characterized in that** the distribution determining means (23) are configured such that the diffuseness about the ellipse section is a function of the determined transit time of the signal transit time measurement.

24. Device (40) according to one of Claims 21 to 23, **characterized in that** the distribution determining means (23) is configured such that the diffuseness about the ellipse section is a function of a speed of the transit time measuring means (1) used to execute the signal transit time measurement.

25. Device (40) according to one of Claims 21 to 24, **characterized by** consistency testing means (35), by means of which a consistency check of the object probability distribution (21) and of a preceding object probability distribution (22) can be undertaken during the fusing of the object probability distribution (21, 22) with the obstacle probability distribution (24), in order to identify detection errors and/or to determine a failure of individual components of the signal transit time measuring means.

26. Device (40) according to one of Claims 21 to 25, **characterized in that** the transit time measuring means (1; 11; 41) comprise an actuator (2; 12; 14) and a sensor (6; 13; 15).

27. Device (40) according to one of Claims 21 to 26, **characterized in that** a relative position between the actuator (2; 12, 14) and/or the sensor (6; 13, 15) and/or the surroundings of the motor vehicle can be altered between the signal transit time measurement and the following signal transit time measurement.

28. Device (40) according to one of Claims 21 to 27, **characterized in that** the actuator (2; 12; 14) and the sensor (6; 13, 15) are arranged on the motor vehicle, and a position determining device (43) is provided by means of which it is possible to determine a change in the motor vehicle position relative to the surroundings.

29. Device (40) according to one of Claims 21 to 28, **characterized in that** the transit time measuring means (1; 11; 41) comprise a further sensor (15) which is arranged spaced apart from the sensor (13).

30. Device (40) according to one of Claims 21 to 29, **characterized in that** the transit time measuring means (1; 11; 41) comprise a further actuator (2; 12, 14) which is arranged spaced apart from the actuator (2; 12).

31. Device (40) according to one of Claims 21 to 30, **characterized in that** the signal transit time measurement can be executed using the actuator (2; 12) and the sensor (6; 13) and the following signal transit time measurement can be executed with the further actuator (14) and the further sensor (15).

32. Device (40) according to one of Claims 21 to 31, **characterized in that** the signal transit time measurement and the following signal transit time measurement can be executed simultaneously, the actuator (12) and the further actuator (14) being able to produce actuator signals (16, 17) with a different identifier or of a different type, and it being possible to treat simultaneously executed signal transit time measurements like iterative signal transit time measurements.

33. Device (40) according to one of Claims 21 to 32, **characterized in that** the transit time measuring means (1; 11; 41) comprise ultrasonic actuators and ultrasonic sensors (6; 13; 15) and/or actuators (2; 12, 14) for emitting electromagnetic radiation and sensors (6; 13; 15) for receiving electromagnetic radiation.

34. Device (40) according to one of Claims 21 to 33, **characterized in that** free areas can be determined by means of area determining means in the surroundings map with the aid of cohesive cells with an occupancy value below a prescribed free value.

35. Device (40) according to Claim 34, **characterized in that** a control unit (46) is configured so as to be able to use the determined free areas as a basis for controlling a manoeuvre to occupy a parking space, a manoeuvre to leave a parking space, a manoeuvre to change lanes, or another driving manoeuvre of the motor vehicle, or a state of the motor vehicle.

36. Device (40) according to one of Claims 21 to 35, **characterized by** an action means by means of which an action can be initiated in the event of an approach and/or of a possible approach of the motor vehicle or a part of the motor vehicle to a position whose corresponding cell in the surroundings map has an occupancy value above an initiation threshold value.

37. Device (40) according to Claim 36, **characterized in that** the action comprises outputting a warning and/or a signal which can be processed.

38. Device (40) according to one of Claims 21 to 37, **characterized in that** the distribution determining means (23) and/or the consistency testing means (35) and/or the mapping means (45) and/or the area determining means and/or the control unit (46) and/or the action means are configured in software and/or hardware.

39. Device (40) according to one of Claims 21 to 38, **characterized in that** the fusing of the object probability distribution with the obstacle probability distribution can be executed with the aid of Bayes' theorem, $P(A|B) = P(B|A) \cdot P(A)/P(B)$, $P(A|B)$ being the "new" value of a cell of the obstacle probability distribution, and $P(B|A)$ being the object probability at the location of the cell, $P(A)$ being the "old" value of the cell of the obstacle probability distribution, and $P(B)$ being a normalization factor for which it holds that:

$$P(B) = P(B|A) \cdot P(A) + (1 - P(B|A) \cdot (1 - P(A)).$$

## Revendications

1. Procédé de détermination des surfaces libres dans un environnement d'un véhicule automobile, dans lequel les étapes suivantes sont itérées :

   a. réalisation d'une mesure de temps de parcours de signal en vue de mesurer des objets (4) dans l'environnement du véhicule automobile ;
   b. détermination de la distribution de probabilité d'objet (21, 22) à l'aide du résultat de la mesure de temps de parcours de signal sous la forme d'un secteur de cercle, un actionneur servant d'émetteur et un capteur servant de récepteur étant placés au même endroit, ou sous la forme d'un secteur ou d'une section d'une ellipse floue dans le premier foyer de laquelle se trouve l'actionneur servant d'émetteur et dans l'autre foyer de laquelle se trouve le capteur servant de récepteur, la probabilité d'objet étant définie de telle sorte que la distribution de probabilité d'objet présente un contour indécis de forme gaussienne entourant la section et/ou le secteur de l'ellipse ou le secteur de cercle ; et

c. fusion de la distribution de probabilité d'objet (21, 22) avec une distribution de probabilité d'obstacle (24), la distribution de probabilité d'obstacle (24) étant représentée à l'aide d'une carte d'environnement cellulaire (28) du véhicule automobile et les valeurs de dotation des cellules (29, 34) étant réduites et/ou augmentées lors de la fusion et les cellules (29, 34, 36) présentant à l'origine une valeur de dotation prédéfinie.

2. Procédé selon la revendication 1, **caractérisé en ce qu'**une forme géométrique de détection est prise en compte lors de la détermination de la distribution de probabilité d'objet (21, 22).

3. Procédé selon la revendication 1 ou 2, **caractérisé en ce que** la probabilité d'objet est déterminée de telle sorte que le contour indécis entourant la section de l'ellipse dépend du temps de parcours calculé de la mesure de temps de parcours de signal.

4. Procédé selon l'une quelconque des revendications 1 à 3, **caractérisé en ce que** la probabilité d'objet est déterminée de telle sorte que le contour indécis entourant la section de l'ellipse dépend d'une vitesse du moyen de mesure de temps de parcours (1) utilisé pour réaliser la mesure de temps de parcours de signal.

5. Procédé selon l'une quelconque des revendications précédentes, **caractérisé en ce que** la forme géométrique de détection d'une mesure suivante du temps de parcours de signal est modifiée.

6. Procédé selon l'une quelconque des revendications précédentes, **caractérisé en ce qu'**un contrôle de cohérence de la distribution de probabilité d'objet (21) et d'une distribution de probabilité d'objet (22) précédente est effectué lors de la fusion de la distribution de probabilité d'objet (21, 22) avec la distribution de probabilité d'obstacle (24).

7. Procédé selon l'une quelconque des revendications précédentes, **caractérisé en ce que** la mesure de temps de parcours de signal et la mesure de temps de parcours de signal suivante sont réalisées à l'aide du même capteur (6).

8. Procédé selon l'une quelconque des revendications précédentes, **caractérisé en ce qu'**une position relative entre un actionneur (2 ; 12, 14) et/ou un capteur (6 ; 13, 15) et/ou l'environnement du véhicule automobile entre la mesure de temps de parcours de signal et la mesure de temps de parcours de signal suivante est modifiée.

9. Procédé selon l'une quelconque des revendications précédentes, **caractérisé en ce qu'**un actionneur (12) est utilisé pour la mesure de temps de parcours de signal et qu'un autre actionneur (14) est utilisé pour la mesure de temps de parcours de signal suivante, les actionneurs (12, 14) étant disposés à une certaine distance l'un de l'autre contre le véhicule automobile.

10. Procédé selon l'une quelconque des revendications précédentes, **caractérisé en ce que** le même actionneur (2) est utilisé pour la mesure de temps de parcours de signal et pour la mesure de temps de parcours de signal suivante.

11. Procédé selon l'une quelconque des revendications précédentes, **caractérisé en ce que** le véhicule automobile modifie sa position entre les mesures de temps de parcours de signal à l'aide du ou des capteurs (6 ; 13 ; 15) et du ou des actionneurs (2 ; 12, 14) disposés sur lui.

12. Procédé selon l'une quelconque des revendications 1 à 9, **caractérisé en ce que** la mesure de temps de parcours de signal est réalisée à l'aide de l'actionneur (12) et du capteur (13) et que la mesure de temps de parcours de signal suivante est réalisée à l'aide de l'actionneur (14) supplémentaire et du capteur (15) supplémentaire.

13. Procédé selon l'une quelconque des revendications précédentes, **caractérisé en ce que** la mesure de temps de parcours de signal et la mesure de temps de parcours de signal suivante sont décalées dans le temps ou sont réalisées simultanément, des signaux d'actionneur (16, 17) présentant des caractéristiques ou des types différents étant utilisés et les mesures de temps de parcours de signal réalisées simultanément étant traitées comme des étapes d'itération individuelles en cas de réalisation simultanée des mesures de temps de parcours de signal.

14. Procédé selon l'une quelconque des revendications précédentes, **caractérisé en ce que** les actionneurs (2 ; 12, 14) émettent des signaux à ultrasons et que les capteurs (6 ; 13 ; 15) reçoivent des signaux à ultrasons et/ou que les actionneurs (2 ; 12, 14) émettent un rayonnement électromagnétique et que les capteurs (6 ; 13 ; 15) reçoivent un rayonnement électromagnétique.

**15.** Procédé selon l'une quelconque des revendications précédentes, **caractérisé en ce que** les surfaces libres dans la carte de l'environnement sont calculées à l'aide des cellules rattachées avec une valeur de dotation inférieure à une valeur libre prédéfinie.

**16.** Procédé selon la revendication 15, **caractérisé en ce que** les surfaces libres calculées servent de base pour commander une manoeuvre de stationnement, une manoeuvre de sortie de stationnement, une manoeuvre de changement de voie ou une autre manoeuvre de conduite du véhicule automobile ou un état du véhicule automobile.

**17.** Procédé selon l'une quelconque des revendications précédentes, **caractérisé en ce qu'**une action est déclenchée en cas d'approche et/ou d'approche éventuelle du véhicule automobile ou d'une partie du véhicule automobile à une position pour laquelle la cellule correspondante comporte dans la carte d'environnement (28) une valeur de dotation supérieure à une valeur seuil de déclenchement.

**18.** Procédé selon la revendication 15, **caractérisé en ce que** l'action comprend l'émission d'un avertissement et/ou d'un signal façonnable.

**19.** Procédé selon l'une quelconque des revendications précédentes, **caractérisé en ce que** le mouvement du véhicule automobile est détecté et est pris en compte en cas de fusion de la distribution de probabilité d'objet (21, 22) avec la distribution de probabilité d'obstacle (24).

**20.** Procédé selon l'une quelconque des revendications précédentes, **caractérisé en ce que** la fusion de la distribution de probabilité d'objet (21, 22) avec la distribution de probabilité d'obstacle (24) est réalisée à l'aide du théorème de Bayes pour lequel P(A|B) = P(B|A) · P(A) / P(B), P(A|B) étant la « nouvelle » valeur d'une cellule de la distribution de probabilité d'obstacle (24), P(B|A) étant la probabilité d'objet (21, 22) à l'endroit de la cellule, P(A) étant l'«ancienne » valeur de la cellule de la distribution de probabilité d'obstacle (24) et P(B) étant un facteur de normalisation pour lequel : P(B) = P(B|A) · P (A) + (1 - P(B|A)) · (1 - P(A)).

**21.** Dispositif (40) de détermination des surfaces libres dans un environnement d'un véhicule automobile comprenant :

d. des moyens de mesure de temps de parcours (1 ; 11 ; 41) permettant de réaliser une mesure de temps de parcours de signal en vue de mesurer des objets (4) dans l'environnement du véhicule automobile ;

e. des moyens de détermination de la distribution (23) permettant de déterminer une distribution de probabilité d'objet (21, 22) à l'aide du résultat de la mesure de temps de parcours de signal sous la forme d'un secteur de cercle, un actionneur servant d'émetteur et un capteur servant de récepteur étant placés au même endroit, ou sous la forme d'un secteur ou d'une section d'une ellipse floue dans le premier foyer de laquelle se trouve l'actionneur servant d'émetteur et dans l'autre foyer de laquelle se trouve le capteur servant de récepteur, la probabilité d'objet étant définie de telle sorte que la distribution de probabilité d'objet présente un contour indécis de forme gaussienne entourant la section et/ou le secteur de l'ellipse ou le secteur de cercle ; et

f. des moyens de cartographication (45) permettant de fusionner la distribution de probabilité d'objet (21, 22) avec une distribution de probabilité d'obstacle (24), la distribution de probabilité d'obstacle (24) étant représentée à l'aide d'une carte d'environnement cellulaire (28) du véhicule automobile et les valeurs de dotation des cellules (29, 34) pouvant être réduites et/ou augmentées lors de la fusion, les cellules (29, 34, 36) présentant à l'origine une valeur de dotation prédéfinie ; et

g. des moyens d'itération configurés de telle sorte que des mesures de temps de parcours de signal, la détermination de la distribution de probabilité d'objets (21, 22) correspondante et la fusion avec la distribution de probabilité d'obstacle (24) peuvent être effectuées de manière itérative.

**22.** Dispositif (40) selon la revendication 21, **caractérisé en ce que** les moyens de détermination de la distribution (23) sont configurés de telle sorte qu'une forme géométrique de détection peut être prise en compte lors de la détermination de la distribution de probabilité d'objet (21, 22).

**23.** Dispositif (40) selon l'une quelconque des revendications 21 ou 22, **caractérisé en ce que** les moyens de détermination de la distribution (23) sont configurés de telle sorte que le contour indécis entourant la section de l'ellipse dépend du temps de parcours calculé de la mesure de temps de parcours de signal.

**24.** Dispositif (40) selon l'une quelconque des revendications 21 à 23, **caractérisé en ce que** les moyens de détermination de la distribution (23) sont configurés de telle sorte que le flou entourant la section de l'ellipse dépend d'une vitesse du moyen de mesure de temps de parcours (1) utilisé pour réaliser la mesure de temps de parcours de signal.

**25.** Dispositif (40) selon l'une quelconque des revendications 21 à 24, **caractérisé par** la présence de moyens de contrôle de cohérence (35) à l'aide desquels un contrôle de cohérence de la distribution de probabilité d'objet (21) et d'une distribution de probabilité d'objet (22) précédente peut être effectué lors de la fusion de la distribution de probabilité d'objet (21, 22) avec la distribution de probabilité d'obstacle (24), afin de détecter des défauts de détection et/ou une panne de composants individuels des moyens de mesure de temps de parcours de signal.

**26.** Dispositif (40) selon l'une quelconque des revendications 21 à 25, **caractérisé en ce que** les moyens de mesure de temps de parcours (1 ; 11 ; 41) comprennent un actionneur (2 ; 12, 14) et un capteur (6 ; 13 ; 15).

**27.** Dispositif (40) selon l'une quelconque des revendications 21 à 26, **caractérisé en ce qu'**une position relative entre l'actionneur (2 ; 12, 14) et/ou le capteur (6 ; 13 ; 15) et/ou l'environnement du véhicule automobile peut varier entre la mesure de temps de parcours de signal et la mesure de temps de parcours de signal suivante.

**28.** Dispositif (40) selon l'une quelconque des revendications 21 à 27, **caractérisé en ce que** l'actionneur (2 ; 12, 14) et le capteur (6 ; 13 ; 15) sont disposés contre le véhicule automobile et qu'un dispositif de détermination de position (43) est prévu à l'aide duquel un changement de position du véhicule automobile peut être calculé par rapport à l'environnement.

**29.** Dispositif (40) selon l'une quelconque des revendications 21 à 28, **caractérisé en ce que** les moyens de mesure de temps de parcours (1 ; 11 ; 41) comprennent un capteur (15) supplémentaire disposé à une certaine distance du capteur (13).

**30.** Dispositif (40) selon l'une quelconque des revendications 21 à 29, **caractérisé en ce que** les moyens de mesure de temps de parcours (1 ; 11 ; 41) comprennent un actionneur (2 ; 12, 14) supplémentaire disposé à une certaine distance de l'actionneur (2 ; 12).

**31.** Dispositif (40) selon l'une quelconque des revendications 21 à 30, **caractérisé en ce que** la mesure de temps de parcours de signal peut être effectuée à l'aide de l'actionneur (2 ; 12) et du capteur (6 ; 13) et que la mesure de temps de parcours de signal suivante peut être effectuée à l'aide de l'actionneur (14) supplémentaire et du capteur (15) supplémentaire.

**32.** Dispositif (40) selon l'une quelconque des revendications 21 à 31, **caractérisé en ce que** la mesure de temps de parcours de signal et la mesure de temps de parcours de signal suivante peuvent être effectuées simultanément, des signaux d'actionneur (16, 17) présentant une caractéristique ou un type différents pouvant être produits par l'actionneur (12) et l'actionneur (14) supplémentaire et les mesures de temps de parcours de signal réalisées simultanément pouvant être traitées comme des mesures de temps de parcours de signal itératives.

**33.** Dispositif (40) selon l'une quelconque des revendications 21 à 32, **caractérisé en ce que** les moyens de mesure de temps de parcours (1 ; 11 ; 41) comprennent des actionneurs à ultrasons et des capteurs à ultrasons (6 ; 13 ; 15) et/ou des actionneurs (2 ; 12, 14) émettant un rayonnement électromagnétique et des capteurs (6 ; 13 ; 15) recevant un rayonnement électromagnétique.

**34.** Dispositif (40) selon l'une quelconque des revendications 21 à 33, **caractérisé en ce que** les surfaces libres dans la carte de l'environnement sont calculées par le biais de moyens de calcul de surface à l'aide des cellules rattachées avec une valeur de dotation inférieure à une valeur libre prédéfinie.

**35.** Dispositif (40) selon la revendication 34, **caractérisé en ce qu'**une unité de commande (46) est configurée, que les surfaces libres calculées servent de base pour commander une manoeuvre de stationnement, une manoeuvre de sortie de stationnement, une manoeuvre de changement de voie ou une autre manoeuvre de conduite du véhicule automobile ou un état du véhicule automobile.

**36.** Dispositif (40) selon l'une quelconque des revendications 21 à 35, **caractérisé par** la présence de moyens d'action à l'aide desquels une action peut être déclenchée en cas d'approche et/ou d'approche éventuelle du véhicule automobile ou d'une partie du véhicule automobile à une position pour laquelle la cellule correspondante comporte une valeur de dotation supérieure à une valeur seuil de déclenchement dans la carte d'environnement.

**37.** Dispositif (40) selon la revendication 36, **caractérisé en ce que** l'action comprend l'émission d'un avertissement et/ou d'un signal façonnable.

**38.** Dispositif (40) selon l'une quelconque des revendications 21 à 37, **caractérisé en ce que** les moyens de détermination de la distribution (23) et/ou les moyens de contrôle de cohérence (35) et/ou les moyens de cartographication (45) et/ou les moyens de calcul de surface et/ou l'unité de commande (46) et/ou les moyens d'action sont configurés sous forme logicielle et/ou matérielle.

**39.** Dispositif (40) selon l'une quelconque des revendications 21 à 38, **caractérisé en ce que** la fusion de la distribution de probabilité d'objet avec la distribution de probabilité d'obstacle est réalisée à l'aide du théorème de Bayes pour lequel P(A|B) = P(B|A) • P(A) / P(B), P(A|B) étant la « nouvelle » valeur d'une cellule de la distribution de probabilité d'obstacle, P(B|A) étant la probabilité d'objet à l'endroit de la cellule, P(A) étant l'« ancienne » valeur de la cellule de la distribution de probabilité d'obstacle et P(B) étant un facteur de normalisation pour lequel : P(B) = P(B|A) ·P (A) + (1 - P(B|A) · (1 - P(A)).

FIG. 1

**FIG. 2**

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10151965 A1
- DE 19842250 A1
- DE 10221339 A1
- DE 10310214 A1
- DE 10124909 A1

**In der Beschreibung aufgeführte Nicht-Patentliteratur**

- Continuous localization in changing environments. **VON KEVIN GRAVES et al.** Computational intelligence in robotics and automation. IEEE Comput. Soc, 10. Juli 1997, 28-33

- **VON EDWARD H. L. FONG et al.** Representing a 3-D environment with a 2 1/2-D map structure. *Proceedings of the 2003 IEEE/RSJ International conference on intelligent robots and systems,* 27. Oktober 2003, vol. 4, 2986-2991